# Europäisches Patentamt

# European Patent Office

# Office européen des brevets

(11) Veröffentlichungsnummer: **0 196 422**
**B1**

(12)

# EUROPÄISCHE PATENTSCHRIFT

(45) Veröffentlichungstag der Patentschrift:
**21.09.88**

(51) Int. Cl.⁴: **B 23 D 31/04**, B 23 D 33/02

(21) Anmeldenummer: **86101583.2**

(22) Anmeldetag: **07.02.86**

(54) **Verfahren und Vorrichtung zum beidseitigen Besäumen und anschliessenden Längsteilen von Blechen.**

(30) Priorität: **26.03.85 DE 3510862**

(43) Veröffentlichungstag der Anmeldung:
**08.10.86 Patentblatt 86/41**

(45) Bekanntmachung des Hinweises auf die Patenterteilung:
**21.09.88 Patentblatt 88/38**

(84) Benannte Vertragsstaaten:
**DE FR GB IT**

(56) Entgegenhaltungen:
**DE-B-1 502 774**
**DE-B-1 627 313**
**DE-B-1 777 014**
**GB-A-1 540 154**
**US-A-3 293 969**

(73) Patentinhaber: **SMS SCHLOEMANN- SIEMAG AKTIENGESELLSCHAFT, Eduard- Schloemann- Strasse 4, D-4000 Düsseldorf 1 (DE)**

(72) Erfinder: **Müller, Adolf, Talsperrenstrasse 35, D-5912 Hilchenbach (DE)**
Erfinder: **Perner, Friedrich, Leo Geslotstrasse 2, A-4550 Bad Hall (AT)**

(74) Vertreter: **Müller, Gerd, Patentanwälte HEMMERICH- MÜLLER- GROSSE- POLLMEIER- MEY Hammerstrasse 2, D-5900 Siegen 1 (DE)**

EP 0 196 422 B1

## Beschreibung

Die Erfindung betrifft ein Verfahren zum beidseitigen Besäumen und unmittelbar daran anschließenden Längsteilen von Blechen, insbesondere Grobblechen, mittels einer Scherenlinie, bei welcher das Blech schrittweise und jeweils mit auf die wirksame Länge der Scherenmesser abgestimmtem Vorschub mittels nahe den Blechrändern wirksamen Treiberpaaren durch eine Doppel-Besäumschere und eine Längsteilschere bewegt sowie während jedes Schnitthubes der Scheren von den stillstehenden Treiberpaaren gleichzeitig an der Schereneinlaufseite und der Scherenauslaufseite festgeklemmt wird, bei welchem die beiden Besäumscheren der Doppel-Besäumschere mit beiden Treibern sämtlicher - also sowohl der der Doppel-Besäumschere als auch der der Längsteilschere ein- und auslaufseitig zugeordneten - Treiberpaare relativ zueinander auf die Breite der besäumten Bleche voreingestellt werden, bei welchem außerdem der Messerspalt an beiden Besäumscheren und auch der Messerspalt an der Längsteilschere auf die jeweilige Blechdicke abgestimmt wird, und bei welchem ferner die beiden Treiber jedes Treiberpaares jeweils mit dem Einlaufen des Blechanfangs geschlossen bzw. gegen das Blech angepreßt sowie mit dem Auslauf des Blechendes geöffnet bzw. von der Transport- oder Durchlaufebene des Bleches abgehoben werden.

Die Erfindung befaßt sich aber auch mit einer Scherenlinie zur Ausübung des Verfahrens, mit einer Doppel-Besäumschere, in der die eine Besäumschere ortsfest und die zweite Besäumschere zur Einstellung auf unterschiedliche Blechbreiten der Bleche querverschiebbar und feststellbar angeordnet ist, mit einer Längsteilschere, die zur Einstellung unterschiedlicher Längsteil-Breiten am Blech querverschiebbar und feststellbar ist, mit Messerspalt-Einstellvorrichtungen an jeder Besäumschere der Doppel-Besäumschere und an der Längsteilschere sowie mit je einem Treiberpaar an der Einlaufseite und der Auslaufseite der Doppel-Besäumschere, wie auch an der Einlaufseite und der Auslaufseite der Längsteilschere, wobei die beiden Treiber sämtlicher Treiberpaare gemeinsam bzw. zugleich mit der querverschiebbaren Besäumschere der Doppel-Besäumschere auf die unterschiedlichen Blechbreiten einstellbar vorgesehen sind.

Wie aus der DE-B-2 340 273 hervorgeht, ist es üblich, Bleche, insbesondere Grobbleche in sogenannten Scherenlinien zunächst an ihren beiden Längskanten mittels einer Doppel-Besäumschere durch Abtrennen schmaler Randstreifen auf eine konstante Maximalbreite zuzuschneiden. Im unmittelbaren Anschluß daran werden dann die solchermaßen besäumten Bleche mit einer Längsteilschere in zwei Längsstreifen von gleicher oder aber auch mehr oder weniger verschiedener Breite aufgespalten.

Um das Aufspalten der besäumten Bleche in zwei Längsstreifen von gleicher oder aber auch mehr oder weniger verschiedener Breite zu ermöglichen, ist die Längsteilschere innerhalb der Scherenlinie quer zur Durchlaufrichtung der Bleche verfahrbar und in jeder Quereinstellung gegen das Fundament fest bremsbar angeordnet.

Damit auch Bleche unterschiedlicher Ausgangs- bzw. Walzbreite in solchen Scherenlinien bearbeitet werden können, ist auch die Doppel-Besäumschere für unterschiedliche Abstände zwischen den beiden parallel zueinander angeordneten Säummesserpaaren ein- und feststellbar ausgelegt. Zu diesem Zweck ist dabei eine der beiden Besäumscheren ortsfest auf dem Fundament montiert, während die zweite Besäumschere - in ähnlicher Weise wie die Längsteilschere - innerhalb der Scherenlinie quer zur Durchlaufrichtung der Bleche verfahrbar und in jeder möglichen Quereinstellung gegen das Fundament festbremsbar angeordnet.

Wie aus der DE-B-2 340 273 hervorgeht, bereitet die Bearbeitung von Blechen, insbesondere Grobblechen, in derartigen Scherenlinien insofern beträchtliche Schwierigkeiten, als an den längsgeteilten Blechen die Schnittkante jeweils im Anfangs- und Endbereich der Blechlänge in unerwünschter Weise und zudem in relativ großem Ausmaß von der Geraden abweicht, während sich in dem dazwischenliegenden Bereich eine gerade Schnittkante mit guter Toleranz einstellt.

Die Abweichungen der Schnittkante von der Geraden treten dabei genau in denjenigen Längenbereichen auf, in welchen das Blech während des Längsteilvorgangs jeweils nur von einem einzelnen Treiber festgehalten bzw. geführt wird.

Die Ursache für die auftretenden Abweichungen liegt also in der nur einpunktigen Halterung der Bleche während der Durchführung des Schnitthubes der Längsteilschere begründet, weil dann nämlich der in Richtung des abgeschnittenen Blechstreifens wirkende Scherdruck des Obermessers eine Verdrehung des Bleches nach der Obermesserseite hin bewirken kann und damit die Bildung eines Trennschnittes nach sich zieht, der um ein der jeweiligen Verdrehung bzw. Verschiebung entsprechendes Ausmaß von der erwünschten Geraden abweicht.

In der DE-B-2 340 273 sind auch bereits verschiedene Maßnahmen beschrieben, um diesen wesentlichen Nachteil auszuschalten.

Die nach der DE-B-2 340 273 vorgeschlagenen Maßnahmen, welche auf der Benutzung von Klemmrollenpaaren basieren, die unmittelbar neben dem Messerbereich der Längsteilschere vorgesehen sind, haben sich insofern bisher am besten bewährt, als hierdurch eine exakte Führung des auf dem ortsfesten Messertisch der Längsteilschere ruhenden Blechabschnitts unabhängig von seiner Abmessung und Elastizität gewährleistet wird und daher an diesem auch im Anfangs- und Endbereich zu einem günstigen Schnittverlauf beiträgt.

Bei dieser bekannten Verfahrensweise wirkt die beim Längsteilschnitt erzeugte, quer zur Laufrichtung des Bleches gerichtete Kraft in dem auf dem ortsfesten Messertisch ruhenden Blechstreifen nur als reine Zugspannung, die sich auf die Klemmrollen überträgt und selbst bei relativ dünnen, schmalen Blechen nur eine geringe elastische Verformung bewirkt, die nur unbedeutende Abweichungen der Schneidkante von der Geraden nach sich zieht.

Beim Längsteilen von Blechen größerer Dicke, bspw. von Grobblechen, die Dicken um 50 mm aufweisen, tritt jedoch auch beim Arbeiten mit einer Klemmrollenanordnung gemäß DE-B-2 340 273, und zwar dort besonders im Endbereich der Bleche, noch eine Abweichung der durch die Längsteilschere erzeugten Schnittkante von einer Geraden auf.

Diese Abweichung des Schnittkantenverlaufs beruht dabei auf dem Umstand, daß der nicht mittels der Klemmrollen festgespannte, also vom Obermesser beaufschlagte Blechstreifen unter der Einwirkung des zwischen den beiden Messern der Längsteilschere entstehenden Kaudrucks zur Obermesserseite hin um ein Maß weggedrückt werden kann, welches das Maß des zwischen dem Untermesser und dem Obermesser eingestellten Messerspaltes in der Längsteilschere überschreitet. Dabei reicht dann der zwischen den Klemmrollenpaaren erzeugbare Klemmdruck nicht aus, um den auf dem ortsfesten Untermessertisch ruhenden Blechstreifen sicher festzuhalten. Die Folge hiervon ist dann das Entstehen eines von der Geraden abweichenden, nämlich nach der Obermesserseite hin schräg ausgelenkten Verlaufs des Längsteilschnittes, welcher sich am Blechende über eine Länge von mehreren Metern, und zwar mindestens über 3 m, erstreckt.

Der Erfindung liegt die Aufgabe zugrunde, eine gattungsgemäße Verfahrensart anzugeben und eine Scherenlinie zu deren Ausübung zu schaffen, mit der ein völlig gerader Verlauf des Längsteil- bzw. Spaltschnittes auch am Blechende auf Dauer gewährleistet wird.

In verfahrenstechnischer Hinsicht wird die Lösung dieses problems nach dem Kennzeichen des Anspruchs 1 erfindungsgemäß dadurch erreicht, daß mit der Breitenvoreinstellung von Doppel-Besäumschere und Treiberpaaren zugleich auch eine Seitwärtsverstellung entsprechender Größenordnung für eine Blechkanten-Seitenführung im Bereich der Längsteilschere ausgelöst bzw. hervorgebracht wird, daß bei dieser Seitwärtsverstellung eine Messerspalteinstellung der Doppel-Besäumschere bzw. die Messerspalteinstellung der Längsteilschere berücksichtigt wird, und daß ggfs. mit jedem Schließen der auslaufseitigen Treiberpaare der Doppel-Besäumschere und/oder der einlaufseitigen Treiberpaare der Längsteilschere die Blechkanten-Seitenführung von der Besäumkante des Bleches entfernt wird, während bei jedem Öffnen der auslaufseitigen Treiberpaare der Doppel-Besäumschere und/oder der einlaufseitigen Treiberpaare der Längsteilschere diese Blechkanten-Seitenführung an der Besäumkante des Bleches herangeführt wird.

Der besondere Vorteil dieser Verfahrensart liegt darin, daß das dem Längsteilvorgang unterworfene Blech nur über denjenigen Zeitraum bzw. diejenige Länge hinweg einer zusätzlichen Führungsmaßnahme utnerworfen wird, während welchem bzw. welcher es in seinem Endbereich von dem zwischen der Doppel-Besäumschere und der Längsteilschere befindlichen Treiberpaaren freikommt und dabei aufeinanderfolgenden Längsteil- bzw. Spaltschnitten unterworfen wird.

Besonders bewährt hat es sich dabei in verfahrenstechnischer Hinsicht noch, wenn nach Anspruch 2 die Blechkanten-Seitenführung in und/oder neben der Längsteilschere relativ zum Blech nur einseitig bewirkt und insbesondere gemäß Anspruch 3 ausschließlich neben der Obermesserseite ausgeübt wird.

Damit sich im Wirkzustand der Blechkanten-Seitenführung keine schädlichen Verklemmungen des vom Obermesser abgetrennten Blechstreifens zwischen der Messerbrust des Untermessers und der Blechkanten-Seitenführung ergeben können, erweist es sich in verfahrensmäßiger Hinsicht nach Anspruch 4 noch als zweckmäßig, wenn die Blechkanten-Seitenführung ausschließlich neben dem einlaufseitigen Ende des Messerpaares der Längsteilschere bewirkt wird, d.h., über den größten Teil der Länge der Längsteilmesser hinweg keine Seitenführung stattfindet.

Eine gattungsgemäße Scherenlinie zur Ausübung der angegebenen Verfahrensart ist erfindungsgemäß nach Anspruch 5 wesentlich dadurch gekennzeichnet, daß in und/oder seitlich neben der Längsteilschere eine Blechkanten-Seitenführung sowohl querverschiebbar als auch relativ zur Transport- bzw. Durchlaufebene für das Blech heb- und senkbar angeordnet ist, daß dabei ein Querverschiebeantrieb für die Blechkanten-Seitenführung einerseits für eine Gleichlaufbewegung mit dem Querverschiebeantrieb der Doppel-Besäumschere und/oder der Treiberpaare synchronisiert sowie andererseits mit der Messerspalt-Einstellvorrichtung der querverschiebbaren Besäumschere und/oder der Messerspalt-Einstellvorrichtung der Längsteilschere in einer Nachführ-Stellverbindung steht und daß ggfs. außerdem ein Stellantrieb für die Blechkanten-Seitenführung mit der Öffnungs- und Schließ-Stellvorrichtung des ausaufseitigen Treiberpaares der Doppel-Besäumschere und/oder des einlaufseitigen Treiberpaares der Längsteilschere gekoppelt ist.

Bei einer möglichen Ausführungsform der Scherenlinie ist erfindungsgemäß nach Anspruch 6 vorgesehen, daß der Querverschiebeantrieb für die Blechkanten-Seitenführung einerseits mit dem Querverschiebeantrieb der Doppel-Besäumschere unmittelbar in mechanischer Stellverbindung steht und andererseits über eine in diese Stellverbindung eingeschaltete Nachstellkupplung mittelbar mit der Messerspalt-Einstellvorrichtung der querverschiebbaren Besäumschere verbunden ist.

Bei dieser erfindungsgemäßen Scherenlinie erweist es sich dann nach Anspruch 7 als wichtig, daß die Nachstellkupplung über eine wegabhängig von der Messerspalt-Einstellvorrichtung steuerbare Stellvorrichtung, z. B. einen Hydraulikzylinder, betätigbar ist, und gemäß Anspruch 8 die Nachstellkupplung zwischen zwei Feststellbremsen, z. B. Scheibenbremsen, im Querverschiebeantrieb angeordnet ist.

Besonders bewährt hat sich nach Anspruch 9, wenn die Nachstellkupplung als Bogenzahnkupplung ausgeführt ist, welche eine axial verschiebbare und drehbar gelagerte Kupplungsmuffe aufweist, die einerseits über Geradverzahnungen und andererseits durch Schrägverzahnungen mit benachbarten Wellenteilen des Querverschiebeantriebs in Verbindung steht. Durch das Ausmaß der jeweiligen Axialverschiebung der Kupplungsmuffe wird über die Schrägverzahnungen eine Nachstellwirkung des Querverschiebeantriebs herbeigeführt, die der jeweiligen Messerspalteinstellung an der querverschiebbaren Besäumschere entspricht.

Eine andere - besonders vorteilhafte - Ausführung einer Scherenlinie nach der Erfindung zeichnet sich gemäß Anspruch 10 dadurch aus, daß der Querverschiebeantrieb für die Blechkanten-Seitenführung einen eigenen Elektromotor, insbesondere einen Gleichstrommotor, aufweist, der mit einem ähnlichen Elektromotor, z. B. Gleichstrommotor, des Querverschiebeantriebs für die Doppel-Besäumschere über eine Synchronschaltung in Stellverbindung steht, und daß mit dem Elektromotor für den Querverschiebeantrieb der Blechkanten-Seitenführung weiterhin eine durch die Messerspalt-Einstellvorrichtung der querverschiebbaren Besäumschere beeinflußbare Nachführ-Steuerschaltung in Verbindung steht. Diese Nachführ-Steuerschaltung wirkt dabei auf den Elektromotor für den Querverschiebeantrieb der Blechkanten-Seitenführung unabhängig von der Synchronschaltung ein und vermittelt dem Querverschiebeantrieb für die Blechkanten-Seitenführung eine der jeweiligen Messerspalt-Einstellung der querverschiebbaren Besäumschere proportionale Zusatzverstellung.

Eine vorteilhafte, erfindungsgemäße Weiterbildung der Scherenlinie nach Anspruch 10 wird nach Anspruch 11 auch darin gesehen, daß der Stellantrieb für die Blechkanten-Seitenführung ein Elektroantrieb, ein Hydraulikantrieb oder auch ein Elektro-Hydraulikantrieb ist, der mit entsprechend ausgelegten Antrieben der Öffnungs- und Schließ-Stellvorrichtung für das bzw. die Treiberpaare in Steuerverbindung steht, welche sich zwischen der Auslaufseite der Doppel-Besäumschere und der Einlaufseite der Längsteilschere befinden.

Es hat sich in erfindungsgemäßer Ausgestaltung einer Scherenlinie besonders bewährt, wenn gemäß Anspruch 12 die Blechkanten-Seitenführung aus einer um eine Vertikalachse frei drehbaren Stützrolle besteht, die auf einem um eine parallel zur Durchlaufrichtung des Bleches verlaufende Horizontalachse verstellbaren Schwenkarm sitzt, welcher wiederum auf einem quer zur Durchlaufrichtung des Bleches horizontal verfahrbaren Wagen oder Schlitten lagert. Alle Bewegungskomponenten der Blechkanten-Seitenführung für ihr relativ kurzzeitiges Zusammenwirken mit dem längszuteilenden Blech werden auf diese Art und Weise leicht, präzise und funktionssicher durchlaufen.

In baulicher Hinsicht hat es sich bewährt, den Heb- und Senkantrieb für die Blechkanten-Seitenführung, entsprechend der Lehre des Anspruchs 13, auf dem Wagen oder Schlitten anzuordnen und von diesem aus am Schwenkarm angreifen zu lassen. Andererseits erweist es sich für einen robusten Betrieb als zweckmäßig, wenn nach Anspruch 14 der Querverschiebeantrieb aus einem Zahnstangengetriebe besteht, das ein ortsfestes Gehäuse für das mit der Zahnstange kämmende Antriebsritzel aufweist, während die Zahnstange mit ihrem einen Ende über ein Gelenk am Wagen befestigt ist. Dabei kann, entsprechend dem Vorschlag des Anspruchs 15, das Antriebsritzel des Querverschiebeantriebs gleichachsig mit der Abtriebswelle eines Untersetzungsgetriebes auf eine gemeinsame Welle mit der Bremsscheibe einer Scheibenbremse aufgekeilt sein, die zwischen dem Untersetzungsgetriebe und dem das Ritzel enthaltenden Gehäuse liegt. Diese Scheibenbremse hält den Querverschiebeantrieb für die Blechkanten-Seitenführung jeweils in seiner Wirklage fest, nachdem sein Elektromotor einerseits zusammen mit dem Elektromotor für den Querverschiebeantrieb der Besäumschere synchron verstellt sowie andererseits mit einer der Messerspalteinstellung der querverschiebbaren Besäumschere proportionalen Zusatzbewegung beaufschlagt worden ist.

Schließlich zeichnet sich eine erfindungsgemäße Scherenlinie nach Anspruch 16 auch noch dadurch aus, daß der den Schwenkarm mit der Vertikalrolle tragende Wagen oder Schlitten längs einer vertikalen Querebene verfahrbar ist, die mit geringfügigem abstand hinter dem einlaufseitigen Ende des Messerpaares der Längsteilschere liegt.

Weitere Merkmale und Vorteile der Erfindung werden nachfolgend an in der Zeichnung dargestellten Ausführungsbeispielen erläutert. Es zeigen

Fig. 1 in schematisch vereinfachter Seitenansicht eine Scherenlinie zum beidseitigen Besäumen und anschließenden Längsteilen von Blechen,

Fig. 2 eine schematisch weiter vereinfachte Draufsicht der Scherenlinie nach Fig. 1,

Fig. 3 in ausführlicher Draufsicht-Darstellung den in den Fig. 1 und 2 mit III gekennzeichneten Längenabschnitt der Scherenlinie,

Fig. 4 einen Schnitt entlang der Linie IV-IV in Fig. 3,

Fig. 5 einen Schnitt entlang der Linie V-V in Fig. 4,

Fig. 6 eine Draufsicht auf den in den Fig. 1 und 2 mit III gekennzeichneten Bereich der Scherenlinie in gegenüber Fig. 3 abgewandelter Bauart,

Fig. 7 eine Seitenansicht des in Fig. 6 gezeigten Teils einer Scherenlinie in Pfeilrichtung VII gesehen,

Fig. 8 einen Schnitt entlang der Linie VIII-VIII in Fig. 7,

Fig. 9 einen Schnitt entlang der Linie IX-IX in den Fig. 6 und 8,

Fig. 10 einen Schnitt entlang der Linie X-X in den Fig. 6 und 8 und

Fig. 11 einen Schnitt entlang der Linie XI-XI in Fig. 8

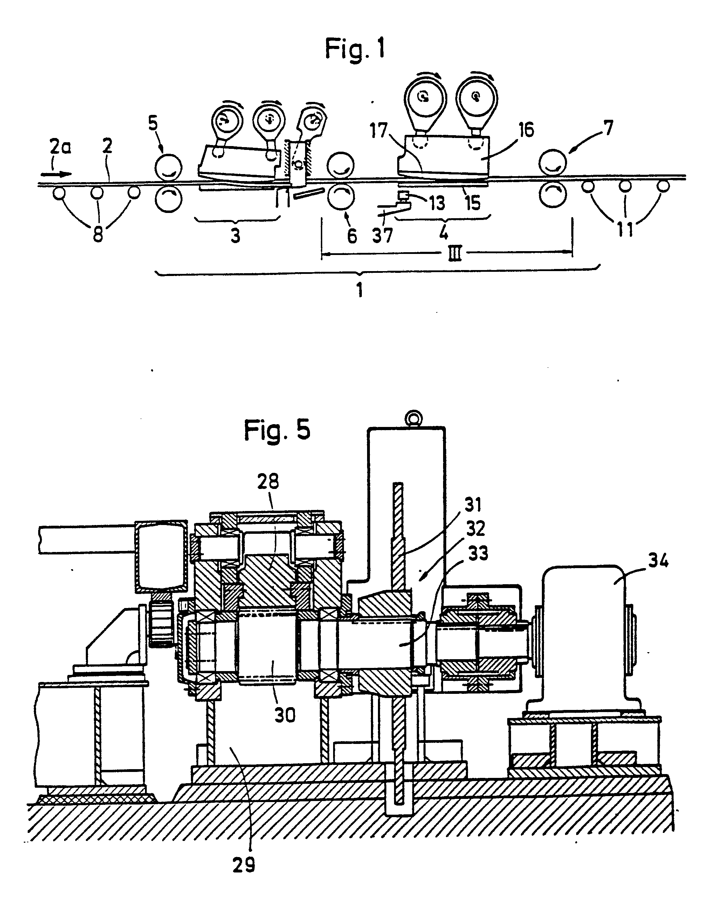

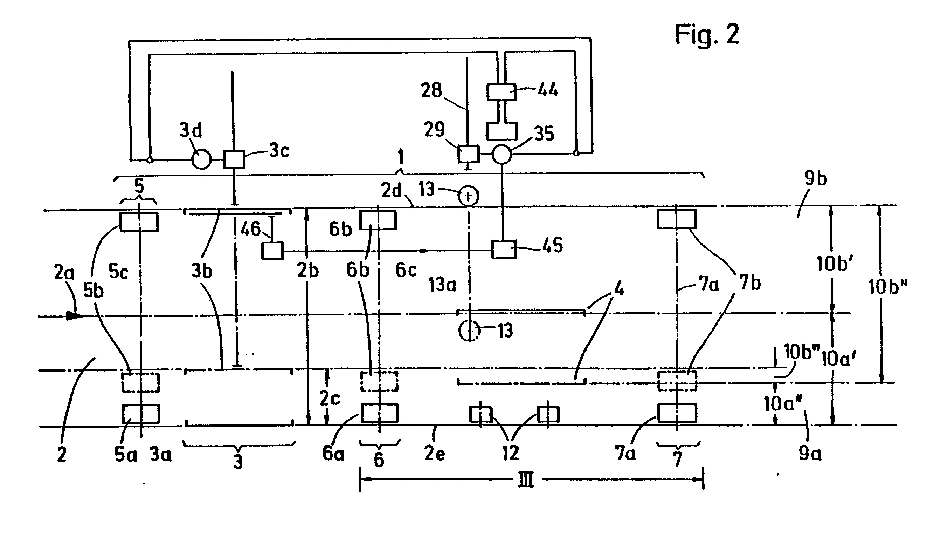

In den Fig. 1 und 2 der Zeichnung ist jeweils in Seitenansicht bzw. in Draufsicht eine Scherenlinie 1 gezeigt, wie sie für das beidseitige Besäumen und das unmittelbar daran anschließende Längsteilen von Blechen 2, und zwar insbesondere Grobblechen, zum Einsatz gelangt.

Innerhalb dieser Scherenlinie 1 ist eine Doppel-Besäumschere 3 aufgebaut, die wiederum eine ortsfest aufgebaute Besäumschere 3a und eine relativ zur Durchlaufrichtung 2a der Bleche 2 querverschiebbar und feststellbar angeordnete Besäumschere 3b umfaßt.

Innerhalb der Scherenlinie 1 ist aber ferner noch eine Längsteilschere 4 aufgebaut, die zur Einstellung unterschiedlicher Längsteil-Breiten am Blech 2 ebenfalls querverschiebbar und festklemmbar angeordnet ist.

Vor der Einlaufseite der Doppel-Besäumschere 3 ist ein Treiberpaar 5 angeordnet, wobei der eine Treiber 5a dieses Treiberpaares 5 der ortsfest montierten Besäumschere 3a zugeordnet ist, während der andere Treiber 5b zur querverschiebbaren Besäumschere 3b gehört. Ein entsprechendes Treiberpaar 6 befindet sich auch hinter der Auslaufseite der Doppel-Besäumschere 3 bzw. vor der Einlaufseite der Längsteilschere 4, wobei es ebenfalls mit dem Treiber 6a der ortsfesten Besäumschere 3a nachgeordnet ist, während sein Treiber 6b sich hinter der querverschiebbaren Besäumschere 3b befindet.

Vorgesehen ist schließlich aber auch noch ein Treiberpaar 7 hinter der Auslaufseite der Längsteilschere 4, welches wiederum einen ortsfesten Treiber 7a und einen querverschiebbaren Treiber 7b umfaßt.

Bei allen drei Treiberpaaren 5, 6 und 7 werden jeweils die Treiber 5b, 6b und 7b gemeinsam relativ zu den Treibern 5a, 6a und 7a in Abhängigkeit von der jeweiligen Besäumbreite des auf dem Rollgang 8 zugeführten Bleches 2 durch Querverschieben ein- und anschließend festgestellt, wobei das Ausmaß dieser Querverschiebung davon abhängig ist, wieweit die querverschiebbare Besäumschere 3b relativ zur ortsfesten Besäumschere 3a verstellt und festgestellt werden muß.

Während in Fig. 2 bei den einzelnen Treiberpaaren 5, 6 und 7 der größte Abstand der Treiber 5b, 6b und 7b von den Treibern 5a, 6a und 7a durch voll ausgezogene Linien angedeutet ist, wird dort der kleinstmögliche Seitenabstand durch strichpunktierte Linien markiert. Ebenso ist dort auch der größtmögliche Seitenabstand der querverschiebbaren Besäumschere 3b von der ortsfesten Besäumschere 3a der Doppel-Besäumschere 3 durch voll ausgezogene Linien wiedergegeben, während der kleinstmögliche Abstand durch strichpunktierte Linien angedeutet ist.

In Fig. 2 der Zeichnung ist ferner die Grundstellung der Längsteilschere 4 relativ zur maximal möglichen Durchlaufbreite des Bleches 2 durch voll ausgezogene Linien kenntlich gemacht, während strichpunktierte Linien ihre relativ dazu mögliche Seitwärtsverschiebung erkennbar machen, wenn das zu besäumende Blech 2 seine minimale Durchlaufbreite aufweist.

Aus Fig. 2 ist auch die maximale Besäumbreite 2b des Bleches 2 sowie dessen minimale Besäumbreite 2c ersichtlich. Die beiden mittels der Längsteilschere 9 aus dem Blech 2 aufgespaltenen Blechstreifen 9a und 9b können bei maximaler Besäumbreite 2b zwischen den Maßen 10a', 10b' und den Maßen 10a'', 10b'' in ihrer Breite variieren, während bei minimaler Besäumbreite 2c die Möglichkeit besteht, den Blechstreifen 9a mit einer Breite 10a'' herzustellen, während gleichzeitig der Blechstreifen 9b eine Breite 10b''' erhalten kann.

Der Rollgang 11 (Fig. 1) dient zum Abtransport der durch die Längsteilschere 4 aus dem Blech 2 aufgespalteten Blechstreifen 9a und 9b, bspw. bis in den Bereich einer (nicht dargestellten) Querteilschere.

Während jedes Arbeitshubes der Längsteilschere 4 kann der Blechstreifen 9a noch durch besondere Klemmrollenpaare 12 in unmittelbarer Nachbarschaft der Längsteilschere 4 festgeklemmt werden.

Mit Hilfe der Scherenlinie 1 wird der Besäumvorgang an beiden Längskanten des Bleches 2 und das Längsteilen des besäumten Bleches 2 in zwei Blechstreifen 9a und 9b während eines schrittweisen Durchlaufs des Bleches 2 ausgeführt. Dabei wird der schrittweise Vorschub des Bleches 2 mittels der Treiberpaare 5, 6 und 7 bewirkt.

Zu Beginn des Besäumvorgangs, d.h., beim Einführen des Blechanfangs in die Doppel-Besäumschere 3, arbeitet nur das Treiberpaar 5 und bewegt das unbesäumte Blech jeweils in Transportschritten, deren Länge auf die wirksame Länge der Messerpaare der beiden Besäumscheren 3a und 3b abgestimmt ist.

Sobald der Blechanfang das Treiberpaar 6 erreicht, kommt auch dieses zur Wirkung, d.h., es wirkt synchron mit dem Treiberpaar 5 auf das Blech 2 ein, um ihm vor jedem Besäumschnitt den nötigen Transportschritt zu erteilen.

Beide Treiberpaare 5 und 6 führen gemeinsam das besäumte Blech 2 in die Einlaufseite der Längsteilschere 4 ein und klemmen es während des Schnitthubes der Längsteilschere 4 gegen unerwünschtes Verschieben sowohl in Längs- als auch in Querrichtung fest.

Nach einer bestimmten Anzahl von Arbeitshüben der Längsteilschere 4, welche dann gleichzeitig mit den Arbeitshüben der Doppel-Besäumschere 3 bzw. 3a, 3b stattfinden können, erreicht der Blechanfang bzw. erreichen die Spitzen der beiden Blechstreifen 9a und 9b das Treiberpaar 7, woraufhin dieses dann ebenfalls synchron mit den Treiberpaaren 5 und 6 wirksam wird und die vorgegebenen Transportschritte zwischen zwei aufeinanderfolgenden Arbeitshüben herbeiführt. Während jedes Arbeitshubes klemmen hingegen die Treiberpaare 5, 6 und 7 das Blech 2 bzw. die Blechstreifen 9a und 9b lagensicher fest.

Nunmehr laufen der Besäumvorgang und der Längsteilvorgang am Blech 2 unter schrittweiser Vorschubbewegung desselben mittels aller drei Treiberpaare 5, 6 und 7 in der Weise ab, daß ihre Treiber 5a, 5b; 6a, 6b; 7a, 7b gemeinsam jeweils dann Klemmkräfte auf das Blech 2 bzw. die Blechstreifen 9a, 9b ausüben, während die Besäumscheren 3a, 3b der Doppelbesäumschere sowie auch die Längsteilschere 4 einen Schnitthub ausführen.

Sobald das Blech 2 soweit durch die Scherenlinie 1 gelaufen ist, daß das Blechende das an der Auslaufseite der Doppel-Besäumchere 3 bzw. vor der Einlaufseite der Längsteilschere 4 wirksame Treiberpaar 6 passiert hat, kann das Blech 2 bzw. können die hieraus durch das Längsteilen gebildeten Blechstreifen 9a und 9b nur noch mittels des Treiberpaares 7 transportiert und zusätzlich mit den Klemmrollen 12 festgeklemmt werden.

Bedingt durch die lediglich noch an der Auslaufseite der Längsteilschere 4 durch das Treiberpaar 7 und den Klemmrollen 12 bewirkte Halterung des Bleches 2 bzw. der Blechstreifen 9a und 9b stellt sich während des Ablaufs der Längsteilschnitte der Nachteil ein, daß sich unter der Wirkung des Scherdruckes und des daraus resultierenden Kaudruckes eine Querverschiebung des Bleches 2 ergibt, die um so größer ausfällt, je näher der Längsteilschnitt an das Blechende gelangt. Dabei kann letztendlich die Querverschiebung des Bleches 2 ein Ausmaß annehmen, welches wesentlich größer ist als der für das ordnungsgemäße Arbeiten der Längsteilschere 4 unumgänglich einzuhaltende Messerspalt zwischen dem ortsfesten Untermesser und dem bewegten Obermesser. Da die Größenordnung der jeweiligen Einstellung des Messerspaltes von der Dicke des in der Scherenlinie 1 bearbeiteten Bleches 2 abhängig ist und dabei bis zu 10 % der jeweiligen Blechdicke ausmacht, ergibt sich zum Blechende hin ein Verlauf des Längsteilschnittes, der um ein beträchtliches Maß von der wünschenswerten Geraden des idealen Schnittverlaufs abweicht. Bei Blechdicken um 50 mm kann dabei die Abweichung des Längsteilschnittes von der Geraden zum Blechende hin durchaus mehr als 7 mm betragen, wobei sich diese Abweichung am Blechende über eine Strecke von mehreren Metern erstreckt und daher zu einer Qualitätsbeeinträchtigung dieser Endlänge der Blechstreifen 9a, 9b führt.

Durch Zuordnung des Klemmrollenpaares 12 zur Längsteilschere 4 ist es zwar möglich, demjenigen Teil der Blechbreite 2b bzw. 2c, welcher nachher den Blechstreifen 9a bildet, einen verbesserten Seitenhalt zu geben und dadurch den Verlauf der Längsteilschnitte zum Blechende hin in gewissem Umfang zu verbessern.

Es hat sich jedoch gezeigt, daß die Klemmrollenpaare 12 nur in den unteren Dickenbereichen von Grobblechen eine genügende Klemmwirkung zu erzeugen vermögen. Bei Blechdicken um 30 mm und mehr sind jedoch die Klemmrollenpaare 12 nicht mehr in der Lage, dem aus dem Scherdruck der Längsteilschere 4 resultierenden Kaudruck zwischen deren Messern einen so großen Widerstand entgegenzusetzen, daß einer Querverschiebung des Bleches entgegengewirkt wird.

Um trotzdem aber einen einwandfrei geraden Schnittverlauf bei der Durchführung von Längsteilschnitten am Blechende zu gewährleisten, werden für das Arbeiten und/oder während des Arbeitens der Scherenlinie 1 besondere verfahrenstechnische Vorkehrungen getroffen.

Mit der für jede zwischen den Maßen 2b und 2c vorkommende Besäumbreite des Bleches 2 notwendigen Breitenvoreinstellung der Doppel-Besäumschere 3, also bei jeder Abstandsvariation der Besäumschere 3b relativ zur Besäumschere 3a und/oder der damit einhergehenden, entsprechenden Abstandsverstellung der Treiber 5b, 6b, 7b gegenüber den Treibern 5a, 6a, 7a der Treiberpaare 5, 6, und 7 wird nämlich zugleich auch eine Seitwärtsverstellung entsprechender Größenordnung für eine Blechkanten-Seitenführung 13 im Bereich der Längsteilschere 4 ausgelöst bzw. hervorgebracht. Bei dieser von der Breitenvoreinstellung der Doppel-Besäumschere 3 bzw. der Treiberpaare 5, 6, 7 abhängigen Seitwärtsverstellung für die Blechkanten-Seitenführung 13 wird dabei auch die entsprechend der jeweiligen Blechdicke vorgegebene Messerspalteinstellung berücksichtigt, die bspw. zwischen dem ortsfesten Untermesser und dem beweglichen Obermesser der verschiebbaren Besäumschere 3b anliegt und welche auch der Messerspalteinstellung an der ortsfesten Besäumschere 3a sowie an der Längsteilschere 4 entspricht. Um die vorgegebene Größenordnung des jeweiligen Messerspaltes wird dabei die Seitwärtsverstellung der Blechkanten-Seitenführung 13 gegenüber der Breitenvoreinstellung der Doppel-Besäumschere 3 nachgeführt.

Während des Normalbetriebs der Scherenlinie 1, und zwar mit dem Schließen des zwischen der Auslaufseite der Doppel-Besäumschere 3 und der Einlaufseite der Längsteilschere 4 angeordneten Treiberpaares 6, wird dabei die Blechkanten-Seitenführung 13 unter die Transport- bzw. Durchlaufebene des Bleches 2 zwangsläufig abgesenkt, wie das in Fig. 1 angedeutet ist. Beim Absenken der Blechkanten-Seitenführung 13 muß durch einen nicht dargestellten Stellantrieb dafür gesorgt werden, daß diese geringfügig horizontal verlagert wird, damit sie ungehindert an der Besäumkante des Bleches vorbeigeführt werden kann. Gleichzeitig mit dem Durchlauf des Blechendes durch das Treiberpaar 6 und dem damit ausgelösten Öffnen seiner beiden Treiber 6a und 6b wird jedoch die Blechkanten-Seitenführung 13, ebenfalls zwangsläufig, über die Transport- bzw. Durchlaufebene für das Blech 2 hochgestellt und mit der ihr zugewendeten Längs- bzw. Besäumkante 2d des Bleches 2 in Stützkontakt gebracht. Bei jedem nachfolgenden Längsteilschnitt der Längsteilschere 4 wird dann die aus dem Scherdruck ihres Messerpaares und dem dabei entstehenden Kaudruck resultierende, horizontale Querkraftkomponente voll von der Blechkanten-Seitenführung 13 aufgenommen und einem Seitwärtsverschieben des Bleches 2 in Richtung zur Obermesserseite der Längsteilschere 4 hin wird wirksam begegnet.

Statt der Absenk- bzw. der Hochstellbewegung der Blechkanten-Seitenführung 13 kann diese auch ausschließlich horizontal verlagert werden.

Allein durch das zeitlich begrenzte Zusammenwirken des Bleches 2 über seine Längskante 2d mit der Blechkanten-Seitenführung 13 wird dann ein völlig gerader Verlauf des Längsteilschnittes auch am Blechende gewährleistet.

Es hat sich bewährt, die zeitlich begrenzte Wirkung der Blechkanten-Seitenführung 13 in und/oder neben der Längsteilschere 4 nur einseitig, nämlich zur Obermesserseite der Längsteilschere 4 hin, auszuüben, ohne daß die Klemmrollenpaare 12 in Tätigkeit treten. Es ist jedoch ohne weiteres auch möglich, gleichzeitig die Klemmrollenpaare 12 in der Nähe der gegenüberliegenden Besäum- bzw. Längskante 2e jedes Bleches 2 auf dessen Ober- und Unterseite einwirken zu lassen, während die Längskante 2e selbst keiner Stützfunktion unterliegt.

Die bestmögliche Ausübung der Verfahrensart wird erreicht, wenn die Blechkanten-Seitenführung 13 ausschließlich kurz hinter dem Einlaufbereich des Messerpaares der Längsteilschere 4 stattfindet, die Längskante 2d des Blechendes also nur auf einer möglichst kurzen Strecke mit der Blechkanten-Seitenführung 13 in Kontaktberührung steht, während ein Längsteilschnitt der Längsteilschere 4 stattfindet.

In Fig. 2 der Zeichnung ist durch strichpunktierte Linien angedeutet, daß die Blechkanten-Seitenführung 13 entlang einer Querebene 13a über eine beträchtliche Wegstrecke quer zur Durchlaufrichtung 2a des Bleches 2 seitwärts verstellt werden kann, um in jedem Falle ihre zeitweilige Wirkverbindung mit der Längskante 2d des Bleches 2 bei den unterschiedlichsten, zwischen den Maßen 2b und 2c liegenden, Besäumbreiten zu gewährleisten.

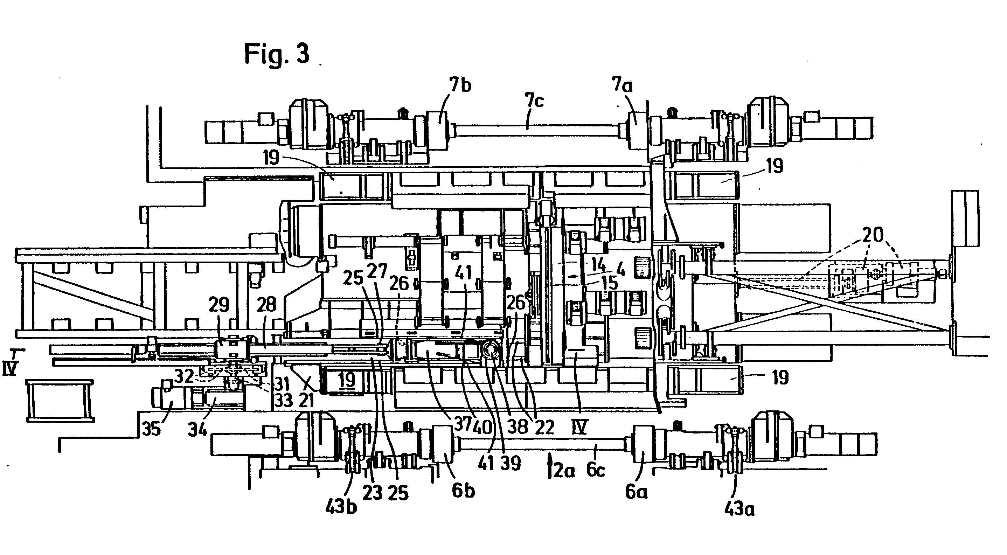

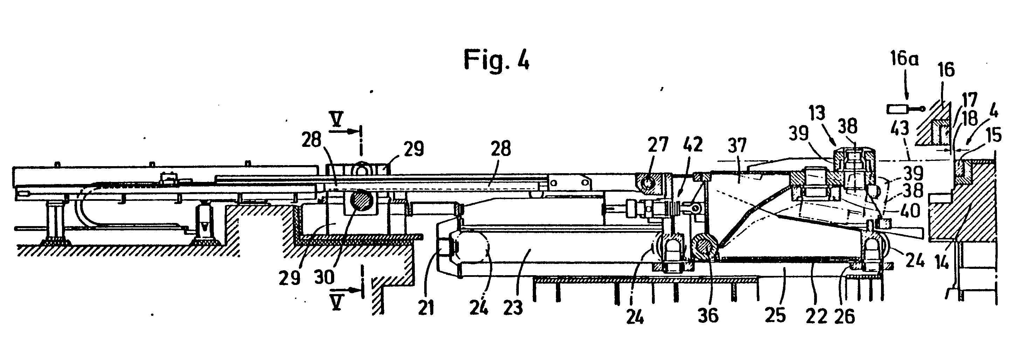

In den Fig. 3 und 4 der Zeichnung ist nur derjenige Längenbereich einer Scherenlinie 1 zum Besäumen und anschließenden Längsteilen von Blechen zu sehen, welcher in Fig. 2 durch die Strecke III eingegrenzt ist. Dabei sind in Fig. 3 die beiden Treiber 6a und 6b des Treiberpaares 6 zu sehen, welches hinter der Auslaufseite der Doppelbesäumschere 3 und/oder vor der Einlaufseite der Längsteilschere 4 angeordnet ist. Gezeigt werden aber auch die beiden Treiber 7a und 7b des Treiberpaares 7, welches der Auslaufseite der Längsteilschere 4 zugeordnet ist.

In Fig. 3 sind dabei sowohl die beiden Treiber 6a und 6b des Treiberpaares 6 als auch die beiden Treiber 7a und 7b des Treiberpaares 7 in derjenigen Einstellage angedeutet, die auf die größte vorkommende Besäumbreite 2b des Bleches 2 abgestimmt ist. Durch die Querverstellvorrichtung 6c läßt sich der Treiber 6b relativ zum Treiber 6a des Treiberpaares 6 aber auch auf jede andere Besäumbreite für durchlaufende Bleche 2 einstellen, sofern dabei die minimale Besäumbreite 2c nicht unterschritten wird.

Eine entsprechende Querverstellvorrichtung 7c ist auch dem Treiberpaar 7 zugeordnet, um dessen Treiber 7b relativ zum Treiber 7a auf die betreffende Besäumbreite der durchlaufenden Bleche 2 einstellen zu können.

Zwischen den beiden Treiberpaaren 6 und 7 ist in Fig. 3 die Längsteilschere 4 angeordnet, wobei dort der Einfachheit halber von dieser Längsteilschere 4 nur der ortsfeste Messertisch 14 mit dem darin sitzenden Untermesser 15 gezeigt ist.

In den Fig. 1 und 4 der Zeichnung ist hingegen von der Längsteilschere 4 auch der heb- und senkbare Messerschlitten 16 gezeigt, in dem das Obermesser 17 sitzt, welches gemäß Fig. 1 als Bogenmesser ausgeführt ist.

In Fig. 4 ist außerdem noch der Messerspalt 18 angedeutet, welcher zwischen der Messerbrust des ortsfesten Untermessers 15 und der Messerbrust des heb- und senkbaren Obermessers 17 in Abhängigkeit von der jeweiligen Blechdicke unterschiedlich eingestellt werden muß,und dessen Größenordnung dabei bis zu 10 % der Dicke des längszuteilenden Bleches 2 ausmacht.

Für die Einstellung des jeweiligen Messerspaltes 18 wird in üblicher Weise der gesamte Messerschlitten 16 durch einen geeigneten Stellantrieb 16a quer zur Längsrichtung der Messer-Schneidkanten bzw. quer zur Durchlaufrichtung 2a des Bleches 2 innerhalb des Scherenständers 19 verschoben und dann auf der die Breite des Messerspaltes 18 bestimmenden Wirkebene festgeklemmt.

Die gesamte Längsteilschere 4 läßt sich mit ihrem Ständer 19 durch einen Querverschiebeantrieb 20 längs ortsfesten Führungsbahnen quer zur Durchlaufrichtung 2a der Bleche verfahren, und zwar in der Weise, daß die Schnittebene ihrer Messer 15 und 17 das Aufspalten der Bleche 2 in zwei parallele Blechstreifen 9a und 9b ermöglicht.

In Fig. 3 der Zeichnung nimmt dabei die Längsteilschere 4 diejenige Querverschiebestellung ein, bei welcher Bleche 2 mit der maximalen Besäumbreite 2b in zwei Blechstreifen 9a und 9b aufgespalten werden, die untereinander gleiche Breite 10a' bzw. 10b' haben, wie das in Fig. 2 angedeutet ist. Die in Fig. 3 gezeigte Querverschiebestellung der Längsteilschere 4 entspricht dabei ihrer Grundstellung, die in Fig. 2 durch voll ausgezogene Linien eingezeichnet ist. Dabei ist sie mit ihrem Scherenständer 19 durch den Querverschiebeantrieb 20 gegen einen ortsfesten Anschlag 21 gefahren.

Selbstverständlich läßt sich die Längsteilschere 4 mittels ihres Querverschiebeantriebs 20 aus der in Fig. 3 gezeigten Grundstellung auch weiter nach rechts fahren, und zwar in Abhängigkeit von der jeweils gewünschten Breite der beiden Blechstreifen 9a und 9b. Bei maximaler Besäumbreite 2b der Bleche 2 ist es dabei möglich, die Längsteilschere 4 so weit nach rechts zu fahren, daß der Blechstreifen 9a eine minimale Breite 10a'' und der zweite Blechstreifen 9b eine maximale Breite 10b'' erhält, wie das die Fig. 2 deutlich macht.

Bei minimaler Besäumbreite 2c der Bleche 2 können diese hingegen durch entsprechendes Querverschieben der Längsteilschere 4 so aufgespalten werden, daß der Blechstreifen 9a die Breite 10a'' erhält, während der Blechstreifen 9b dann nur eine Breite 10b'' hat, wie das aus Fig. 2 erkennbar ist.

Während der Abstand zwischen den beiden Treibern 6a und 6b bzw. 7a und 7b der beiden Treiberpaare 6 und 7 über die Querverstellvorrichtungen 6c und 7c synchron mit der Querverschiebung der Besäumschere 3b relativ zur ortsfesten Besäumschere 3a der Doppel-Besäumschere 3 verstellt wird, läßt sich die Längsteilschere 4 über ihren Querverschiebeantrieb 20 völlig unabhängig von der Doppel-Besäumschere 3 verlagern und damit auch unabhängig hiervon auf die jeweils gewünschten Längsteilbreiten für die besäumten Bleche 2 einjustieren.

In den Fig. 3 und 4 ist gezeigt, daß in den Ständer 19 der Längsteilschere 4 quer zur Durchlaufrichtung 2a der Bleche 2 bzw. quer zu deren Schnittebene eine ortsfeste Fahrbahn 22 hineinragt, auf der ein Wagen 23 mittels Stützrädern 24 läuft.

Die Fahrbahn 22 hat auch Seitenführungen 25, zwischen die der Wagen 23 mittels Führungsrollen 26 eingreift, die um vertikale Achsen drehbar sind.

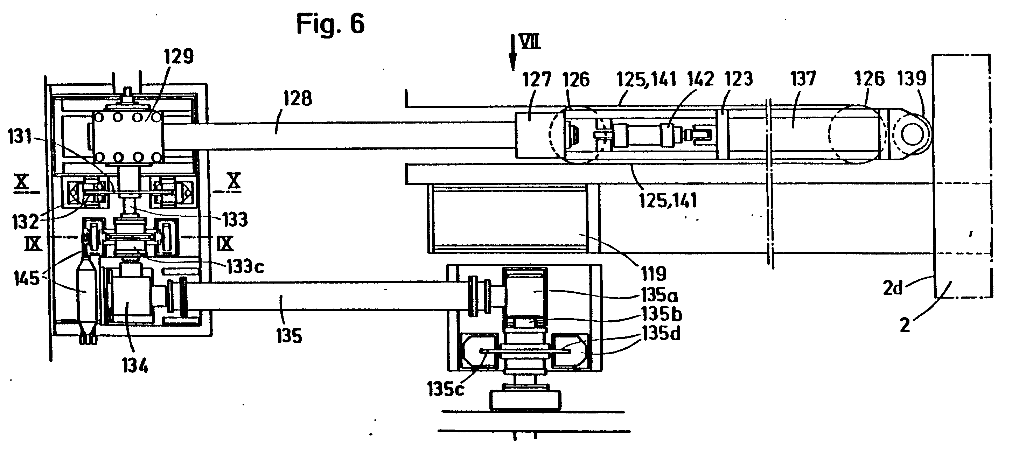

Am Wagen 23 greift über ein Gelenk 27 eine Zahnstange 25 an, die mit einem in einem ortsfesten Getriebegehäuse 29 lagernden Ritzel 30 kämmt und ein Zahnstangengetriebe bildet, wie das deutlich die Fig. 4 und 5 zeigen. Das Ritzel 30 sitzt mit der Bremsscheibe 31 einer Scheibenbremse 32 auf einer gemeinsamen Welle 33, die über ein Getriebe 34, bspw. ein Schrauben- oder Schneckengetriebe, durch einen Elektromotor 35 angetrieben wird. Der Elektromotor 35, bspw. ein Gleichstrommotor, wirkt über die Zahnstange 25 als Querverschiebeantrieb auf den Wagen 23 ein, wobei dieser aufgrund der zwischengeschalteten Getriebeuntersetzungen sehr exakt, nämlich um Bruchteile von Millimetern genau, auf der ortsfesten Fahrbahn 22 bewegt werden kann. Mittels der Scheibenbremsen 32 läßt sich dann der Wagen 23 in jeder möglichen Stellung über das Ritzel 30 und die Zahnstange 28 exakt blockieren.

Im Wagen 23 ist um eine parallel zur Durchlaufrichtung 2a des Bleches 2 verlaufende Horizontalachse 36 ein Schwenkarm 37 auf einer Vertikalebene beweglich gehalten, der an seinem freien Ende eine aufwärts gerichtete Lagerachse 35 trägt, auf der frei drehbar eine Rolle 39 mit zylindrischer Mantelfläche sitzt. Zur exakten Seitenführung des Schwenkarmes 37 ist dieser in der Nähe der Rolle 39 unterseitig mit einer weiteren Rolle 40 ausgestattet, welche wiederum mit zwei ortsfesten Seitenführungen 41 zusammenwirken kann.

Am Schwenkarm 37 greift ein Heb- und Senkantrieb 42 an, welcher auf dem Wagen 23 verankert ist und als Elektroantrieb, Hydraulikantrieb oder auch Elektro-Hydraulikantrieb ausgelegt werden kann. Mit Hilfe dieses Heb- und Senkantriebes 42 läßt sich der Schwenkarm 37 zwischen der in Fig. 4 durch voll ausgezogene Linien dargestellten, angehobenen Wirkstellung und der durch strichpunktierte Linien gekennzeichneten, abgesenkten Ruhestellung verlagern. In der angehobenen Wirkstellung des Schwenkarmes 37 ist dabei die Rolle 39 mit ihrer Achse 38 vertikal ausgerichtet und ragt über die Transport- bzw. Durchlaufebene 43 für die Bleche 2 nach oben hinaus. In der abgesenkten Ruhestellung nimmt hingegen die Rolle 39 mit ihrer Lagerachse 38 eine gegen die Vertikalachse geneigte Lage ein und befindet sich dabei völlig unterhalb der Durchlauf- bzw. Transportebene 43 für die Bleche 2.

Der Elektromotor 35 des Querverschiebeantriebes 28 bis 35 für den Wagen 23 ist - gemäß Fig. 2 - durch eine elektrische Synchronschaltung bzw. Gleichlaufregelung 44 so mit einem entsprechenden Elektromotor 3d des Querverschiebeantriebes 3c für die querverstellbare Besäumschere 3b der Doppel-Besäumschere 3 gekoppelt, daß der vom Querverschiebeantrieb 28 bis 35 betätigte Wagen 23 immer exakt den gleichen Stellweg durchläuft, wie die querverschiebbare Besäumschere 3b relativ zur ortsfesten Besäumschere 3a.

Der Elektromotor 35 des Querverschiebeantriebs 28 bis 35 für den Wagen 23 steht aber - ebenfalls gemäß Fig. 2 - außerdem noch über eine Nachführ-Steuerschaltung 45 mit der Messerspalt-Einstellvorrichtung 46 an der querverschiebbaren Besäumschere 3b in Stellverbindung, dergestalt, daß der Elektromotor 35 eine zusätzliche Querverstellung für den Wagen 23 auslöst, die in ihrer Größenordnung immer der Messerspalteinstellung zwischen dem Obermesser und dem Untermesser der Besäumschere 3b entspricht. Da aber die Größenordnung der Messerspalte an beiden Besäumscheren 3a und 3b der Doppel-Besäumschere 3 mit dem Messerspaltabstand 16 der Längsteilschere 4 übereinstimmend, nämlich in Abhängigkeit von der jeweils zu durchtrennenden Blechdicke, eingestellt wird, ist sichergestellt, daß die jeweilige Querverschiebebewegung für den Wagen 23 dem Querverschiebeweg der Besäumschere 3b unter gleichzeitiger Berücksichtigung des darin vorgegebenen Messerspaltes entspricht.

Der Elektromotor 35 des Querverschiebeantriebs 28 bis 35 oder der nicht dargestellte horizontal wirkende Stellantrieb steht in direkter Steuerverbindung mit den Antrieben 43a und 43b der Öffnungs- und Schließ-Stellvorrichtungen für das Treiberpaar 6. Dabei ist diese Steuerverbindung so ausgeführt, daß einer der erstgenannten Antriebe die Blechkanten-Seitenführung 13 in ihre Wirkstellung nach vorne bringt, sobald die Antriebe 43a und 43b die Öffnungs- und Schließ-Stellvorrichtungen des Treiberpaares 6 im Öffnungssinne beaufschlagen. Umgekehrt wird durch die erstgenannten Antriebe die Blechkanten-Seitenführung 13 in ihre Ruhestellung zurückgezogen, sobald die Antriebe 43a und 43b der Öffnungs- und Schließ-Stellvorrichtungen damit beginnen, das Treiberpaar 6 zu schließen bzw. gegen ein durchlaufendes Blech 2 anzustellen.

Die auf dem Schwenkarm 37 des querverfahrbaren Wagens 23 frei drehbar gelagerte Rolle 39 bildet dabei die Blechkanten-Seitenführung 13, die vorstehend anhand der Fig. 1 und 2 erläutert wurde, und welche nur dann mit der Längskante 2d des besäumten und längszuteilenden Bleches 2 in Wirkverbindung gebracht wird, wenn das hintere Ende des Bleches 2 im Verlauf des Längsteilvorgangs vom einlaufseitigen Treiberpaar 6 der Längsteilschere 4 freikommt. Durch den Stützkontakt der Blechkante 2d mit der Blechkanten-Seitenführung 13 bzw. der diese bildenden Vertikalrolle 39 wird ein exakt geradlinig verlaufender Längsteilschnitt auch im Endbereich des längszuteilenden Bleches 2 und damit der hieraus aufgespaltenen beiden Blechstreifen 9a und 9b sichergestellt.

Zu erwähnen ist noch, daß die elektrische Synchronschaltung bzw. Gleichlaufregelung 44 zwischen dem Elektromotor 3d des Querverschiebeantriebs 3c für die querverstellbare Besäumschere 3b und dem Elektromotor 35 des Querverschiebeantriebs 28 bis 35 für die Blechkanten-Seitenführung 13 ein üblicher Gleichlauf-Regler sein kann. Hierbei sitzt auf der Welle jedes Elektromotors 3d und 35 als Drehzahlgeber-Maschine ein Tachodynamo. Die Spannungen der beiden Tachodynamos werden gegeneinander geschaltet. Die Differenzspannung liegt am Eingang eines Verstärkers an. Bei einer Drehzahlabweichung der beiden Motoren 3d und 35 tritt eine nach Größe und Richtung der Abweichung proportionale Spannung am Verstärkereingang auf. Die verstärkte Spannung wird der Hilfserregerwicklung eines Elektromotors, bspw. des Elektromotors 35, zugeführt. Es ändert dessen Erregerfeld in der Weise, daß seine Drehzahl wieder mit derjenigen des anderen Elektromotors, z. B. des Elektromotors 3d, übereinstimmt.

Sollwert ist dabei die Drehzahl des Elektromotors 3d, Istwert die Drehzahl des Elektromotors 35. Drehzahlgeber, Verstärker und Hilfserregerwicklung bilden zusammen einen P-Regler. Die mit der Messerspalt-Einstellvorrichtung 46 an der Besäumschere 3b zusammenarbeitende Nachführ-Steuerschaltung 45 umfaßt einen Weg- bzw. Hubgeber, welcher die jeweilige Messerspaltverstellung in eine zur Fernübertragung geeignete elektrische Größe umformt. Als Weg- bzw. Hubgeber, der auch noch Hübe von wenigen Zehntelmillimetern exakt erfaßt, kann ein Differentialtransformator verwendet werden, bei dem ein Spulenkörper in der Mitte eine Primärwicklung und beiderseits davon je eine Sekundärwicklung trägt. Letztere sind elektrisch gegeneinandergeschaltet. Nimmt der Eisenkern die Mittelstellung ein, dann wird in jeder der beiden Sekundärspulen eine gleichgroße Wechselspannung induziert. Die Ausgangs-Differenzspannung ist dann Null. Beim Verschieben des Eisenkerns entsteht infolge der jetzt unterschiedlichen magnetischen Kopplung in der einen Sekundärwicklung eine größere, in der anderen aber eine kleinere Spannung, wodurch die Ausgangsspannung linear mit der Auslenkung des Eisenkerns ansteigt.

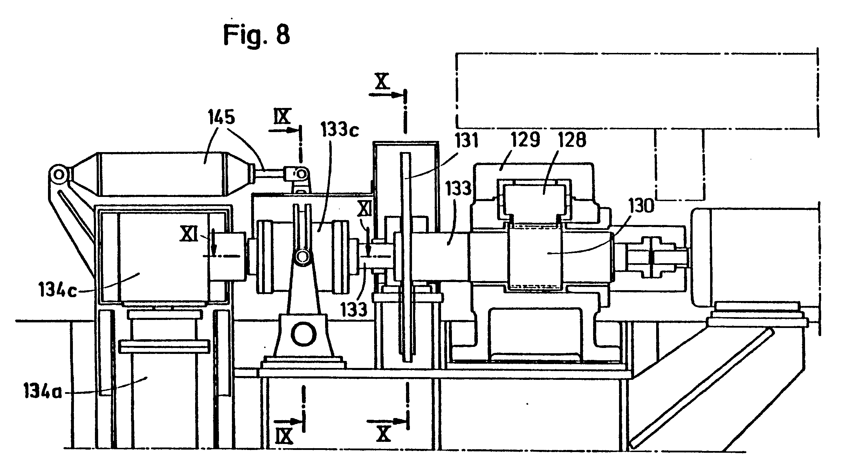

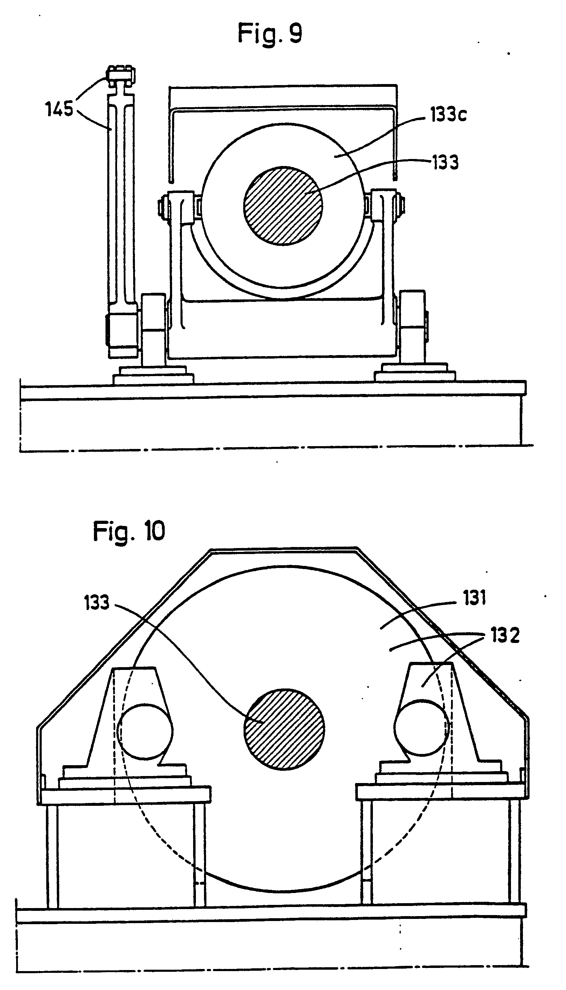

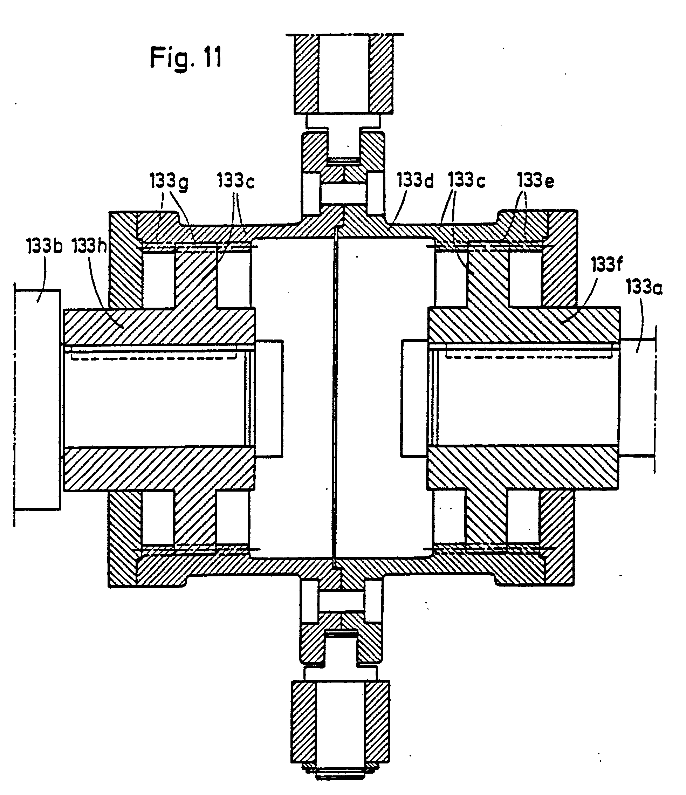

Aus den Fig. 6 bis 11 der Zeichnung ist der die Blechkanten-Seitenführung 13 betreffende Teil der Scherenlinie 1 nach den Fig. 1 und 2 in einer Bauart gezeigt, die von derjenigen nach den Fig. 3 bis 5 abweicht.

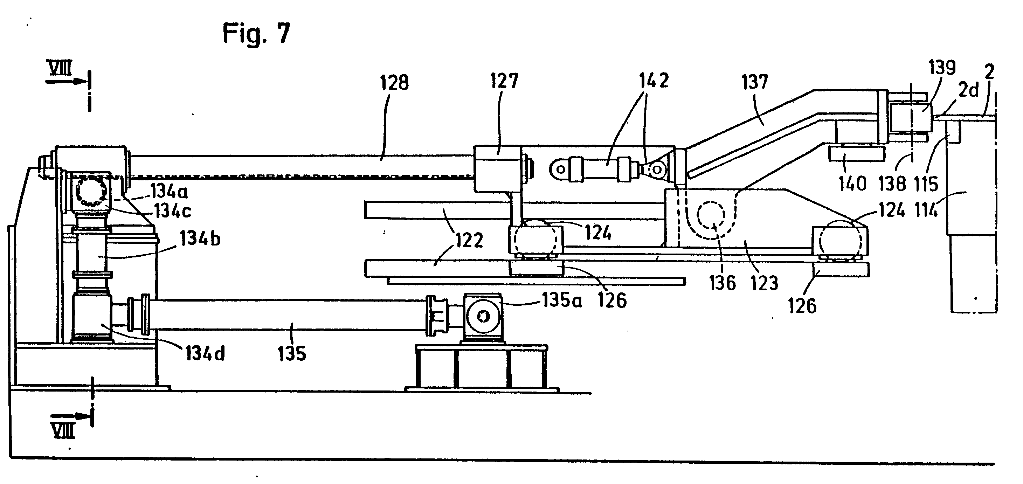

Die Funktionsteile der Blechkanten-Seitenführung nach den Fig. 6 bis 11 sind, soweit sie mit den Funktionsteilen der Blechkanten-Seitenführung 13 nach den Fig. 3 bis 5 übereinstimmen, mit gleichen Bezugzeichen versehen, jedoch jeweils um die Zahl 100 erhöht. Aus den Fig. 6 und 7 geht hervor, daß in den Ständer 119 der Längsteilschere 4 die Fahrbahn 122 hineinragt, auf welcher der Wagen 123 mittels seiner Stützräder 124 läuft. Auch die Fahrbahn 122 hat Seitenführungen 125, zwischen die der Wagen 123 mittels Führungsrollen 126 eingreift, welche um vertikale Achsen frei drehbar sind.

Am Wagen 123, und zwar an einem Kupplungsauge 127 desselben, greift eine Zahnstange 128 an, welche mit einem Ritzel 130 kämmt, das in einem ortsfesten Getriebegehäuse 129 lagert und mit der Zahnstange 128 ein Zahnstangengetriebe bildet.

Das Ritzel 130 dieses Zahnstangengetriebes sitzt dabei mit der Bremsscheibe 131 einer Scheibenbremse 132 auf einer gemeinsamen Welle 133, welche mit einem Getriebe 134, bspw. einem als Kegelradgetriebe ausgebildeten Winkelgetriebe, in Verbindung steht. Das Getriebe 134 steht dabei über mehrere Zwischenwellen 134a und 134b sowie mehrere Zwischen-Winkelgetriebe 134c und 134d mit einer Antriebswelle 135 in Verbindung, die wiederum an ein Winkelgetriebe 135a angeschlossen ist. Das Winkelgetriebe 135a erhält seinen Antrieb von einer Welle 135b, auf welche die Bremsscheibe 135c einer Scheibenbremse 135 d aufgekeilt ist. Die Welle 135b steht dabei wiederum in Antriebsverbindung mit dem Querverschiebeantrieb 3c für die querverstellbare Besäumschere 3b der Doppel-Besäumschere 3, welcher mit dem Elektromotor 3d gekoppelt ist.

Die Welle 133, welche die Verbindung zwischen dem Ritzel 130 und dem Winkelgetriebe 134 herstellt, ist zwischen der Scheibenbremse 132 und dem Winkelgetriebe 134 in zwei koaxiale Wellenabschnitte 133a und 133b unterteilt, wobei die Drehantriebsverbindung zwischen diesen Wellenabschnitten 133a und 133b durch eine Bogenzahnkupplung 133c ständig aufrechterhalten wird.

Die Bogenzahnkupplung 133c hat dabei eine axial verschiebbare Kupplungsmuffe 133d, die einerseits über Schrägverzahnungen 133e mit einer Kupplungsnabe 133f in Eingriff steht, die auf den Wellenabschnitt 133a aufgekeilt ist. Andererseits ist sie aber über Geradverzahnungen 133g mit einer Kupplungsnabe 133h in Eingriff gehalten, die wiederum auf den Wellenabschnitt 133b aufgekeilt ist.

Die Zahnstange 128 bildet mit dem Ritzel 130, dessen Welle 133 sowie den Getriebezügen 134 und 135 den Querverschiebeantrieb 128 bis 135 für den Wagen 123, welcher mit dem Querverschiebeantrieb 3c für die querverstellbare Besäumschere 3b in mechanischer Gleichlaufverbindung gehalten ist.

Hierdurch wird erreicht, daß der Wagen 123 beim Querverschieben der querverstellbaren Besäumschere 3b immer eine dazu synchrone Querverstellbewegung gleicher Größenordnung ausführt.

Die Kupplungsmuffe 133d der Bogenzahnkupplung 133c ist über einen Verschiebeantrieb 145 koaxial zur Welle 133 bzw. zu deren Wellenabschnitten 133a und 133b relativ zu den Kupplungsnaben 133f und 133h verstellbar vorgesehen. Dabei ist der Verstellantrieb 145 bspw. als Hydraulikzylinder ausgeführt, dessen Stellbewegung unmittelbar abhängig ist von der Messerspalt-Einstellvorrichtung 46 an der querverstellbaren Besäumschere 3b.

Der vom Verstellantrieb 145 erzeugte axiale Stellweg für die Kupplungsmuffe 133b der Bogenzahnkupplung 133c ist proportional der jeweiligen Messerspaltverstellung, welche durch die Messerspalt-Einstellvorrichtung 46 bewirkt wird. Sie ist so abgestimmt, daß über die Schrägverzahnung 133e der Bogenzahnkupplung 133c dem Querverschiebeantrieb 128 bis 135 eine Zusatzbewegung überlagert wird. Der Verstellweg für den Wagen 123 wird dadurch gegenüber dem jeweiligen Verstellweg der querverstellbaren Besäumschere 3b um die Größenordnung des Messerspaltes in dieser verändert.

An dieser Stelle sei erwähnt, daß die Betätigung der Bogenzahnkupplung 133c über den Stellantrieb 145 bei gelöster Scheibenbremse 132, jedoch bei angezogener Scheibenbremse 135d stattfindet.

Die Scheibenbremse 132 wird hingegen angezogen, wenn der Wagen 123 in seine endgültige Arbeitsstellung relativ zur Längsteilschere 4 gefahren worden ist.

Auch auf dem Wagen 123 ist um eine parallel zur Durchlaufrichtung 2a des Bleches 2 verlaufende Horizontalachse 136 ein Schwenkarm 137 gelagert, welcher sich längs einer Vertikalebene bewegen läßt. Er trägt an seinem freien Ende eine aufwärts gerichtete Lagerachse 138, auf der die frei drehbare Rolle 139 mit zylindrischer Mantelfläche sitzt.

Der exakten Seitenführung des Schwenkarmes 137 dient eine Rolle 140, welche in der Nähe der Rolle 139 unterseitig am Schwenkarm 137 lagert und mit zwei ortsfesten Seitenführungen 141 zusammenwirken kann, die mit den Seitenführungen 125 auf gleicher Vertikalebene liegen.

Am Schwenkarm 137 greift der Heb- und Senkantrieb 142 an, welcher auf dem Wagen 123 verankert ist. Durch diesen Heb- und Senkantrieb 142 läßt sich der Schwenkarm zwischen seiner angehobenen Wirkstellung gemäß Fig. 7 und einer abgesenkten Ruhestellung verlagern. Während er in der angehobenen Wirkstellung mit der Rolle 139 eine solche Ausrichtlage hat, daß deren Achse 138 vertikal verläuft, ist in der abgesenkten Ruhestellung die Rolle 139 mit ihrer Lagerachse 138 in einer gegen die Vertikale geneigten Lage gehalten. In der angehobenen Wirkstellung überragt die Rolle 139 die Durchlauf- bzw. Transportebene für das längszuteilende Blech 2 und wirkt mit dessen Besäumkante 2d als Blechkanten-Seitenführung 13 zusammen.

Der Heb- und Senkantrieb 142 für den Schwenkarm 137 kann in direkter Steuerverbindung mit den Antrieben für die Öffnungs- und Schließ-Stellvorrichtungen des Treiberpaares 6 stehen. Diese Steuerverbindung ist dabei solcherart, daß über den Heb- und Senkantrieb 142 der Schwenkarm 137 in seine Wirkstellung nach oben gebracht wird, sobald das Treiberpaar 6 sich im Öffnungssinne bewegt. Andererseits wird durch den Hebund Senkantrieb 142 der Schwenkarm 137 in seine Ruhestellung abgesenkt, wenn die Öffnungs- und Schließ-Stellvorrichtungen damit beginnen, das Treiberpaar 6 zu schließen bzw. gegen ein durchlaufendes Blech 2 anzustellen.

**Patentansprüche**

1. Verfahren zum beidseitigen Besäumen und unmittelbar daran anschließenden Längsteilen von Blechen (2), insbesondere Grobblechen, mittels einer Scherenlinie (1), bei welchem das Blech schrittweise und jeweils mit auf die wirksame Länge der Scherenmesser abgestimmtem Vorschub mittels nahe den Blechrändern wirksamen Treiberpaaren (5, 6, 7) durch eine Doppel-Besäumschere (3) und eine Längsteilschere (4) bewegt sowie während jedes Schnitthubes der Scheren von den stillstehenden Treiberpaaren gleichzeitig an der Schereneinlaufseite und der Scherenauslaufseite festgeklemmt wird, bei welchem die beiden Besäumscheren der Doppel-Besäumschere mit den beiden Treibern sämtlicher - also sowohl der der Doppel-Besäumschere als auch der der Längsteilschere ein- und auslaufseitig zugeordneten - Treiberpaare relativ zueinander auf die Breite der besäumten Bleche voreingestellt werden, bei welchem außerdem der Messerspalt (18) an beiden Besäumscheren und auch der Messerspalt der Längsteilschere auf die jeweilige Blechdicke abgestimmt wird, und bei welchem ferner die beiden Treiber jedes Treiberpaares jeweils mit dem Einlaufen des Blechanfangs geschlossen bzw. gegen das Blech angepreßt sowie mit dem Auslaufen des Blechendes geöffnet bzw. von der Transportebene des Bleches abgehoben werden, dadurch gekennzeichnet, daß mit der Breitenvoreinstellung (3c, 3d bzw. 5c, 6c, 7c) von Doppel-Besäumschere (3, 3a, 3b) und Treiberpaaren (5, 5a, 5b; 6, 6a, 6b; 7, 7a, 7b) zugleich auch eine Seitwärtsverstellung (28 bis 35) entsprechender Größenordnung für eine Blechkanten-Seitenführung (13) im Bereich der Längsteilschere (4) ausgelöst bzw. hervorgebracht wird (44), daß bei dieser Seitwärtsverstellung (28 bis 35) eine Messerspalteinstellung (46) der Doppel-Besäumschere (3, 3a, 3b) bzw. die Messerspalteinstellung (18) der Längsteilschere (4) berücksichtigt wird, und daß ggfs. mit jedem Schließen der auslaufseitigen Treiberpaare (6, 6a, 6b) der Doppel-Besäumschere (3, 3a, 3b) und/oder der einlaufseitigen Treiberpaare (6, 6a, 6b) der Längsteilschere (4) die Blechkanten-Seitenführung (13) von der Besäumkante des Bleches (2) entfernt wird (37, 42 bzw. 137, 142), während bei jedem Öffnen der auslaufseitigen Treiberpaare (6, 6a, 6b) der Doppel-Besäumschere (3, 3a, 3b) und/oder der einlaufseitigen Treiberpaare (6, 6a, 6b) der Längsteilschere (4) die Blechkanten-Seitenführung (13) an die Besäumkante des Bleches (2) herangeführt wird.

2. Verfahren nach Anspruch 1, dadurch gekennzeichnet, daß die Blechkanten-Seitenführung (13) in und/oder neben der Längsteilschere (4) relativ zum Blech (2) nur einseitig bewirkt wird (2d).

3. Verfahren nach einem der Ansprüche 1 und 2, dadurch gekennzeichnet, daß die Blechkanten-Seitenführung (13) in und/oder neben der Längsteilschere (4) ausschließlich an der Obermesserseite bewirkt wird .

5. Verfahren nach einem der Ansprüche 2 bis 3, dadurch gekennzeichnet, daß die Blechkanten-Seitenführung (13) ausschließlich neben dem einlaufseitigen Ende des Messerpaares (15, 17) der Längsteilschere (4) bewirkt wird.

5. Scherenlinie zur Ausübung des Verfahrens nach einem oder mehreren der Ansprüche 1 bis 4, mit einer Doppelbesäumschere (3), in der die eine Besäumschere (3a) ortsfest und die zweite Besäumschere (3b) zur Einstellung auf unterschiedliche Besäumbreiten der Bleche (2) querverschiebbar und feststellbar angeordnet ist, mit einer Längsteilschere (4), die zur Einstellung unterschiedlicher Längsteil-Breiten am Blech querverschiebbar und feststellbar ist, mit Messerspalt-Einstellvorrichtungen (46) an jeder Besäumschere der Doppel-Besäumschere und an der Längsteilschere sowie mit je einem Treiberpaar (5, 6, 7) an der Einlaufseite und der Auslaufseite der Doppel-Besäumschere, wie auch an der Einlaufseite und der Auslaufseite der Längsteilschere, wobei die beiden Treiber sämtlicher Treiberpaare gemeinsam bzw. zugleich mit der querverschiebbaren Besäumechere der Doppel-Besäumschere auf die unterschiedlichen Besäumbreiten der Bleche einstellbar vorgesehen sind, dadurch gekennzeichnet, daß in und/oder seitlich neben der Längsteilschere (4) eine Blechkanten-Seitenführung (13) sowohl querverschiebbar (28 bis 35) als auch relativ zur Transport- bzw. Durchlaufebene (43) für das Blech heb- und senkbar (37, 42 bzw. 137, 142) angeordnet ist, daß dabei ein Querverschiebeantrieb (28 bis 35 bzw. 128 bis 135) für die Blechkanten-Seitenführung (13) einerseite für eine Gleichlaufbewegung mit dem Querverschiebeantrieb (3c, 3d) der Doppel-Besäumschere (3, 3a, 3b) und/oder der Treiberpaare (5, 6, 7) synchronisiert (44) sowie andererseits mit der Messerspalt-Einstellvorrichtung (46) der querverschiebbaren (3c, 3d) Besäumschere (3b) und/oder der Messerspalt-Einstellvorrichtung (16a) der Längsteilschere (4) in einer Nachführ-Stellverbindung (45) steht, und daß ggfs. außerdem ein Stellantrieb (37, 42 bzw. 137, 142) für die Blechkanten-Seitenführung (13) mit der Öffnungs- und Schließ-Stellvorrichtung (43a, 43b) des auslaufseitigen Treiberpaares (6) der Doppel-Besäumschere (3, 3a, 3b) und/oder des einlaufseitigen Treiberpaares (6) der Längsteilschere (4) gekoppelt ist.

6. Scherenlinie nach Anspruch 5,
   dadurch gekennzeichnet,
   daß der Querverschiebeantrieb (128 bis 135) für die Blechkanten-Seitenführung (13) einerseits mit dem Querverschiebeantrieb (3c, 3d) der Doppel-Besäumschere (3, 3a, 3b) unmittelbar in mechanischer Stellverbindung steht und andererseits über eine in diese Stellverbindung eingeschaltete Nachstellkupplung (133c) mittelbar mit der Messerspalt-Einstellvorrichtung (46) der querverschiebbaren Besäumschere (3d) verbunden ist (145).

7. Scherenlinie nach einem der Ansprüche 5 und 6,
   dadurch gekennzeichnet,
   daß die Nachstellkupplung (133c) über eine wegabhängig von der Messerspalt-Einstellvorrichtung (46) steuerbare Stellvorrichtung (145), z. B. einen Hydraulikzylinder, betätigbar ist.

8. Scherenlinie nach einem der Ansprüche 5 bis 7,
   dadurch gekennzeichnet,
   daß die Nachstellkupplung (133c) zwischen zwei Feststellbremsen (135d und 132), z. B. Scheibenbremsen, im Querverschiebeantrieb (128 bis 135) angeordnet ist .

9. Scherenlinie nach einem der Ansprüche 5 bis 8,
   dadurch gekennzeichnet,
   daß die Nachstellkupplung (133c) als Bogenzahnkupplung ausgeführt ist, welche eine axial verschiebbare und drehbar gelagerte Kupplungsmuffe (133d) aufweist, die einerseits über Geradverzahnungen (133g) und andererseits durch Schrägverzahnungen (133e) mit einander benachbarten Wellenteilen (133a und 133b) des Querverschiebeantriebs (128 bis 135) in Eingriff steht (133f, 133h).

10. Scherenlinie nach Anspruch 5,
    dadurch gekennzeichnet,
    daß der Querverschiebeantrieb (28 bis 35) für die Blechkanten-Seitenführung (13) einen eigenen Elektromotor (35), insbesondere einen Gleichstrommotor, aufweist, der mit einem ähnlichen Elektromotor (3d), z. B. Gleichstrommotor, des Querverschiebeantriebs (3c) für die Doppel-Besäumschere (3, 3a, 3b) über eine Synchronschaltung (44), z. B. einen Gleichlauf-Regler, in Stellverbindung steht, und daß mit dem Elektromotor (35) für den Querverschiebeantrieb (28 bis 35) der Blechkanten-Seitenführung (13) weiterhin eine durch die Messerspalt-Einstellvorrichtung (46) der querverschiebbaren Besäumschere (3b) beeinflußbare Nachführ-Steuerschaltung (45), bspw. einen Differentialtransformator, in Verbindung steht.

11. Scherenlinie nach einem der Ansprüche 5 bis 10,
    dadurch gekennzeichnet,
    daß der Stellantrieb (37, 42 bzw. 137, 142) für die Blechkanten-Seitenführung (13) ein Elektroantrieb, ein Hydraulikantrieb oder auch ein Elektro-Hydraulikantrieb ist, der mit entsprechend ausgelegten Antrieben (43a, 43b) der Öffnungs- und Schließ-Stellvorrichtungen für das Treiberpaar (6) an der Auslaufseite der Doppel-Besäumschere (3, 3a, 3b) bzw. an der Einlaufseite der Längsteilschere (4) in Steuerverbindung steht.

12. Scherenlinie nach einem der Ansprüche 5 bis 11,
    dadurch gekennzeichnet,
    daß die Blechkanten-Seitenführung (13) aus einer um eine Vertikalachse (38 bzw. 138) frei drehbaren Stützrolle (39 bzw. 139) besteht, die auf einem um eine parallel zur Durchlaufrichtung (2a) des Bleches (2) verlaufende Horizontalachse (36 bzw. 136) verstellbaren Schwenkarm (37 bzw. 137) sitzt, welcher wiederum auf einem quer zur Durchlaufrichtung (2a) des Bleches (2), horizontal verfahrbaren Wagen (23 bzw. 123) oder Schlitten lagert.

13. Scherenlinie nach einem der Ansprüche 5 bis 12,
    dadurch gekennzeichnet,
    daß der Heb- und Senkantrieb (42 bzw. 142) für die Blechkanten-Seitenführung (13) auf dem Wagen (23 bzw. 123) oder Schlitten sitzt und am Schwenkarm (37 bzw. 137) angreift.

14. Scherenlinie nach einem der Ansprüche 5 bis 13,
    dadurch gekennzeichnet,
    daß der Querverschiebeantrieb (28 bis 35 bzw. 128 bis 135) ein Zahnstangengetriebe (28, 30 bzw. 128, 130) enthält, das ein ortsfestes Gehäuse (29 bzw. 129) für das mit der Zahnstange (28 bzw. 128) kämmende Antriebsritzel (30 bzw. 130) aufweist, während die Zahnstange (28 bzw. 128) mit ihrem einen Ende, z. B. über ein Gelenk (27) bzw. eine Muffe (127), am Wagen (23 bzw. 123) befestigt ist.

15. Scherenlinie nach einem der Ansprüche 5 und 10 bis 14,
    dadurch gekennzeichnet,

daß das Antriebsritzel (30) des Querverschiebeantriebs (28 bis 35) gleichachsig mit der Abtriebswelle eines Untersetzungsgetriebes (34) auf eine gemeinsame Welle (33) mit der Bremsscheibe (31) einer Scheibenbremse (32) aufgekeilt ist, die zwischen dem Untersetzungsgetriebe (34) und dem das Ritzel (30) enthaltenden Gehäuse (29) liegt.

16. Scherenlinie nach einem der Ansprüche 5 bis 18,

dadurch gekennzeichnet,

daß der den Schwenkarm (37 bzw. 137) mit der Vertikalrolle (39 bzw. 139) tragende Wagen (23 bzw. 123) oder Schlitten längs einer vertikalen Querebene (13a) verfahrbar ist, die mit geringfügigem Abstand hinter dem einlaufseitigen Ende des Messerpaares (15, 17) der Längeteilschere (4) liegt.

## Claims

1. Method for the trimming at both sides and immediately following longitudinal parting of sheet metal plates (2), in particular of thick sheet metal plates, by means of a shearing line, in which the sheet metal is moved through a double trimming shears (3) and a longitudinal parting shears (4) step by step and each time with an advance matched to the effective length of the shearing blades by means of driver pairs (5, 6, 7) effective near the sheet metal edges as well as clamped fast simultaneously at the shears inlet side and at the shears outlet side by the stationary-driver pairs during each cutting stroke of the shears, in which both the trimming shears of the double trimming shears with both the drivers of all driver pairs, thus those associated at the inlet side and the outlet side with the double trimming shears as well as also with the longitudinal parting shears, are preset one relative to the other to the width of the trimmed metal sheets, in which beyond that the blade gap (18) at

both trimming shears and also the blade gap of the londitudinal parting shears is matched to the respective sheet metal thickness and in which furthermore both the drivers of each driver pair are each time closed or pressed against the sheet metal plate on the running-in of the beginning of the sheet metal plate as well as opened or raised from the transport plane for the sheet metal plate on the running-out of the end of the sheet metal plate, characterised thereby, that together with the width presetting (3c, 3d or 5c, 6c, 7c) of double trimming shears (3, 3a, 3b) and driver pairs (5, 5a, 5b; 6, 6a, 6b; 7, 7a, 7b), a sideways resetting (28 to 35) of corresponding order of magnitude for a lateral sheet metal edge guide (13) in the region of the longitudinal parting shears (4) is also initiated or brought about (44) at the same time, that a blade gap setting (46) of the double trimming shears (3, 3a, 3b) or the blade gap setting (18) of the longitudinal parting shears (4) is taken into consideration in this sideways re-settin9 (28 to 35) and that, in a given case, the lateral sheet metal edge guide (13) is removed (37, 42 or 137, 142) from the trimming edge of the sheet metal plate (2) on each closing of the outlet side driver pairs (6, 6a, 6b) of the double trimming shears (3, 3a, 3b) and/or the inlet side driver pairs (6, 6a, 6b) the longitudinal parting shears (4), whilst the lateral sheet metal edge guide (13) is guided to the trimming edge of the sheet metal plate (2) on each opening of the outlet side driver pairs (6, 6a, 6b) of the double trimming shears (3, 3a, 3b) and/or the inlet side driver pairs (6, 6a, 6b) the longitudinal parting shears (4).

2. Method according to claim 1, characterised thereby, that the lateral sheet metal edge guide (13) is effected only one-sidedly (2d) relative to the sheet metal plate (2) in and/or beside the longitudinal parting shears (4).

3. Method according to one of the claims 1 and 2, characterised thereby, that the lateral sheet metal edge guide (13) is effected exclusively (Fig. 4) at the upper blade side in and/or beside the longitudinal parting shears (14).

4. Method according to one of the claims 2 to 3, characterised thereby, that the lateral sheet metal edge guide (13) is effected exclusisely beside the inlet side end of the blade pair (15, 17).

5. Shearing line for the exercise of the method according to one or more of the claims 1 to 4, with a double trimming shears (3), in which the one trimming blade (3a) is arranged to be fixedly located and the second trimming blade (3b) to be transversely displaceable and locatable for the setting to different trimming widths of the sheet metal plates (2), with longitudinal parting shears (4), which are transversely displaceable and locatable for the setting of different longitudinal parting widths at the sheet metal, with blade gap setting devices (46) at each trimming shears of the double trimming shears and at the longitudinal parting shears as well as with a respective driver pair (5, 6, 7) at the inlet side and the outlet side of the double trimming shears as also at the inlet side and the outlet side of the longitudinal parting shears wherein both the drivers of all driver pairs are provided to be settable together with or at the same time as the transversely displaceable trimming shears of the double trimming shears to the different trimming widths of the sheet metal plates, characterised thereby, that a lateral sheet metal edge guide (13) is arranged in and/or laterally beside the longitudinal parting shears (4) to be transversely displaceable (28 to 35) as well as also to be raisable and lowerable (37, 42 or 137, 142) relative to the transport or transit plane (43) for the sheet metal plate, that a transverse displacement drive (28 to 35 or 128 to 135) for the lateral sheet metal edge guide (13) in that case stands in a follow-up setting connection (45) on the one hand for a synchronous movement synchronised (44) with the transverse displacement drive (3c, 3d) of the double trimming shears and/or the driver pairs (5, 6, 7) as well as on the other hand with the blade gap setting device (46) of the transversely displacable (3c, 3d) trimming blade (36) and or the blade gap setting device (16a) of the longitudinal parting shears (4) and that in a given case beyond that a setting drive (37, 42 or 137, 142) for the lateral sheet metal edge guide (13) is coupled with the opening and closing setting device (43a, 43b) of the outlet side driver pair (6) of the double trimming shears (3, 3a, 3b) and/or the inlet side driver pair (6) of the longitudinal parting shears (4).

6. Shearing line according to claim 5, characterised thereby, that the transverse displacement drive (128 to 135) for the lateral sheet metal guide (13) on the one hand stands directly in mechanical setting connection with the transverse displacement drive (3c, 3d) of the double trimming shears (3, 3a, 3b) and on the other hand is connected (145) by way of a resetting coupling (133c), which is interposed in this setting connection, indirectly with the blade gap setting device (46) of the transversely displacable trimming blade (36b).

7. Shearing line according to one of the claims 5 and 6, characterised thereby, that the resetting coupling (133c) is actuable by way of a setting device (145), for examble a hydraulic cylinder, controllable in dependence on travel from the blade gap setting device (145).

8. Shearing line according to one of the claims 5 to 7, characterised thereby, that the resetting coupling (133c) is (135d and 132), for example disc brakes, in the transverse displacement drive (128 to 135).

9. Shearing line according to one of the claims 5 to 8, characterised thereby, that the resetting coupling (133c) is constructed as spiral tooth gear coupling which displays an axially displaceable and rotatably borne coupling sleeve (133d), which stands in engagement (133f, 133h) on the one hand by way of straight-fluted gearing (133g) and on the other hand by way of helical gearing (133a) with mutually adjacent shaft parts (133a and 133b) of the transverse displacement drive (128 to 135).

10. Shearing line according to claim 5, characterised thereby, that the transverse displacement drive (28 to 35) for the lateral sheet metal edge guide (13) displays an own electrical motor (35), in particular a direct current motor, which stands in setting connection by way of a synchronising circuit (44), for example a synchronous speed regulator, with a similar electrical motor (3d), for example a direct current motor, of the transverse displacement drive for the double trimming shears (3, 3a, 3b) and that a follow-up control circuit (45), for example a differential transformer, which is influenceable by the blade gap setting device (46) of the transversely displaceable trimming blade (3b), further stands in connection with the electrical motor (35) for the transverse displacement drive (28 to 35) of the lateral sheet metal edge guide (13).

11. Shearing line according to one of the claims 5 to 10, characterised thereby, that the setting drive (37, 42 or 137, 142) for the lateral sheet metal edge guide (13) is an electrical drive, a hydraulic drive or even an electrohydraulic drive which stands in control connection with correspondingly designed drives (43a, 43b) of the opening and closing setting devices for the driver pair (6) at the outlet side of the double trimming shears (3, 3a, 3b) and at the inlet side of the longitudinal parting shears (4), respectively.

12. Shearing line according to one of the claims 5 to 11, characterised thereby, that the lateral sheet metal edge guide (13) consists of a supporting roller (39 or 139), which is freely rotatable about a vertical axis (38 or 138) and sits on a pivot arm (37 or 137), which is displaceable about a horizontal axis (36 or 136) extending parallelly to the transit direction (2a) of the sheet metal plate (2) and which in turn is borne on a carriage (23 or 123) or slide horizontally movable transversely to the transit direction (2a) of the sheet metal plate (2).

13. Shearing line according to one of the claims 5 to 12, characterised thereby, that the raising and lowering drive (42 or 142) for the lateral sheet metal edge guide (13) sits on the carriage (23 or 123) or slide and engages at the pivot arm (37 or 137).

14. Shearing line according to one of the claims 5 to 13, characterised thereby, that the transverse displacement drive (28 to 35 or 128 to 135) contains a toothed rack gear (23, 30 or 128, 130), which displays a fixedly located housing (29 or 129) for the driving pinion (30 or 130) meshing with the toothed rack (29 or 128), whilst the toothed rack (28 or 128), is fastened by its one end, for example by way of a joint (27) or a sleeve (127), at the carriage (23 or 123).

15. Shearing line according to one of the claims 5 and 10 to 14, characterised thereby, that the driving pinion (30) of the transverse displacement drive (28 to 35) is keyed co-axially with the output shaft of a step-down gear (34) on a common shaft (33) with the brake disc (31) of a disc brake (32), which lies between the step-down gear (34) and the housing (29) containing the pinion (30).

16. Shearing line according to one of the claims 5 to 15, characterised thereby, that the carriage (23 or 123) or the slide, which carries the pivot arm (37 or 137) with the vertical roller (39 or 139), is movable along a vertical transverse plane (13a), which lies at a slight spacing behind the inlet side end of the blade pair (15, 17) of the longitudinal parting shears (4).

**Revendications**

1. Procédé de cisaillage à largeur bilatéral immédiatement suivi d'un cisaillage longitudinal de tôles (2), notamment des tôles fortes, au moyen d'une ligne de cisaillage (1), dans lequel la tôle est transport graduellement, avec une avance correspondant chaque fois à la longueur active de la lame de la cisaille, par des paires de dispositifs de transport (5, 6, 7) qui agissent à proximité rives de la tôle pour la faire passer dans une cisaille double de cisaillage à largeur (3) et dans une cisaille de cisaillage longitudinal (4), la tôle étant bloquée, pendant chaque course de coupe des cisailles par les paires de dispositifs de transport à l'arrêt, simultanément à l'entrée et à la sortie des cisailles, dans lequel les deux cisailles de la cisaille double de cisaillage à largeur sont, de même que les deux dispositifs de toutes les paires de dispositifs de transport montées à l'entrée et à la sortie aussi bien de la cisaille double de cisaillage à largeur que de la cisaille de cisaillage longitudinal, préréglées en position dans le sens de la largeur des tôles cisaillées à largeur, dans lequel, par ailleurs, l'écartement (18) des lames des deux cisailles de cisaillage à largeur et l'écartement des lames de la cisaille de cisaillage longitudinal sont réglés chaque fois suivant l'épaisseur de la tôle et dans lequel, de plus, les dispositifs de chaque paire de dispositifs de transport sont, au moment de l'engagement de l'avant de la tôle, fermés ou pousses contre la tôle et, au moment de la sortie de l'arrière de la tôle, ouverts et soulevés pour s'écarter du plan de transport de la tôle, caractérisé en ce que le préréglage en largeur (3c, 3d ou 5c, 6c, 7c) de la cisaille double de cisaillage à largeur (3, 3a, 3b) et des paires de dispositifs de transport (5, 5a, 5b, 6, 6a, 6b, 7, 7a 7b) s'accompagne (44) du réglage en position, d'un ordre de grandeur correspondant, dans le sens latéral (28 à 37), d'un dispositif de guidage latéral (13) des rives de la tôle dans la zone de la cisaille de cisaillage longitudinal (4), en ce que le réglage en position dans le sens latéral (28 à 35) s'effectue compte tenu du réglage de l'écartement des lames (46) de la cisaille de cisaillage à largeur (3, 3a, 3b) ou du réglage de l'écartement des lames (18) de la cisaille de cisaillage longitudinal (4) et en ce que, le cas échéant, à chaque fermeture des paires de dispositifs de transport (6, 6a, 6b) situées à la sortie de la cisaille double de cisaillage à largeur (3, 3a, 3b) et/ou des paires de dispositifs de transport (6, 6a, 6b) situées à l'entrée de la cisaille de cisaillage longitudinal (4) le dispositif de guidage latéral (13) des rives de la tôle est éloigné (37, 42 ou 137, 142) des rives de la tôle (2) tandis qu'à chaque ouverture des paires de dispositifs de transport (6, 6a, 6b) situées à la sortie de la cisaille double de cisaillage à largeur (3, 3a, 3b) et/ou des paires de dispositifs de transport (6, 6a, 6b) situées à l'entrée de la cisaille de cisaillage longitudinal (4), le dispositif de guidage latéral (13) des rives de la tôle est rapproché de la rive de cisaillage de la tôle (2).

2. Procédé selon la revendication 1, caractérisé en ce que le guidage latéral (13) des rives de la tôle à l'intérieur et/ou à proximité de la cisaille de cisaillage longitudinal (4) par rapport à la tôle (2) ne s'effectue que d'un côté (2d).

3. Procédé selon l'une des revendications 1 ou 2, caractérisé en ce que le guidage latéral (1 3) des rives de la tôle à l'intérieur et/ou à proximité de la cisaille de cisaillage longitudinal (14) ne s'effectue qu'au niveau de la lame supérieure (Figure 4).

4. Procédé selon l'une des revendications (2 ou 3), caractérisé en ce que le guidage latéral (13) des rives de la tôle s'effectue exclusivement à proximité de l'entrée de la paire de lames (15, 17) de la cisaille de cisaillage longitudinal (4).

5. Ligne de cisaillage pour l'application du procédé selon l'une ou plusieurs des revendications 1 à 4, caractérisée en ce qu'elle comporte une cisaille double de cisaillage à largeur (3) dans laquelle l'une des cisailles (3a) de cisaillage à largeur est montée à poste fixe tandis que la deuxième cisaille (3b) de cisaillage à largeur peut être déplacée transversalement et fixée pour le réglage à différentes valeurs de la largeur de cisaillage de la tôle, une cisaille de cisaillage longitudinal (4) qui peut être déplacée transversalement et fixée pour le réglage de la largeur de cisaillage de la tôle, des dispositifs (46) de réglage de l'écartement des lames pour chacune des cisailles de la cisaille double de cisaillage à largeur et de la cisaille de cisaillage longitudinal, des paires de dispositifs de transport (5, 6, 7) montées à l'entrée et à la sortie de la cisaille double de la cisaille à largeur et à l'entrée et à la sortie de la cisaille de cisaillage longitudinal, les deux dispositifs de toutes les paires de dispositifs de transport pouvant être réglés, de même que la cisaille de la cisaille double de cisaillage à largeur qui peut se déplacer dans le sens transversal, pour le réglage de la largeur de cisaillage des rives de la tôle, caractérisée en ce qu'elle comporte à l'intérieur et/ou sur le côté, à proximité de la cisaille de cisaillage longitudinal (4), un dispositif de guidage (13) des rives de la tôle qui peut se déplacer transversalement (28 à 35) ou se soulever ou s'abaisser (37, 42 ou 137, 142) par rapport au plan de transport ou de passage (43) de la tôle, en ce qu'elle comporte un dispositif de déplacement dans le sens transversal (28 à 35 ou 128 à 135) du dispositif latéral (13) des rives de la tôle, d'une part, pour assurer le déplacement en synchronisme avec le dispositif de déplacement (3c, 3d) dans le s ens transversal de la cisaille double de cisaillage à largeur (3, 3a, 3b) et/ou des paires de dispositifs de transport (5, 6, 7) et, d'autre part, est relié pour un déplacement de réglage (45), au dispositif (46) de réglage de l'écartement des lames de la cisaille (3b) de cisaillage à largeur qui se déplace transversalement et/ou au dispositif (16a) de réglage de l'écartement des lames de la cisaille de cisaillage longitudinal (4), en ce qu'elle comporte, le cas échéant, un dispositif de commande (37, 42 ou 137, 142) du dispositif de guidage latéral (13) des rives de la tôle accouplé au dispositif (43a, 43b) d'ouverture et de fermeture de la paire (6) de dispositifs de transport située à la sortie de la cisaille double (3, 3a, 3b) de cisaillage à largeur et /ou de la paire (6) de dispositifs de transport située à l'entrée de la cisaille de cisaillage longitudinal (4).

6. Ligne de cisaillage selon la revendication 5, caractérisée en ce que le dispositif (128 à 135) de commande du déplacement dans le sens transversal du dispositif de guidage latéral (13) des rives de la tôle est en liaison mécanique pour le réglage avec le dispositif (3c, 3d) de déplacement dans le sens transversal de la cisaille double (3, 3a) de cisaillage à largeur et, par l'intermédiaire d'un accouplement de réglage (133c) incorporé à cette liaison de réglage, avec le dispositif de réglage (46) de l'écartement des lames de la cisaille (3d) de cisaillage à largeur qui se déplace dans le sens transversal.

7. Ligne de cisaillage selon l'une des revendications 5 ou 6 caractérisée en ce que l'accouplement de réglage (133c) peut être mis en action par un dispositif de mise en place, par exemple par un vérin hydaulique, commandé en fonction du déplacement par le dispositif (46) de réglage de l'écartement des lames.

8. Ligne de cisaillage selon l'une des revendications 5 à 7, caractérisée en ce que l'accouplement de réglage (133c) est placé, dans le dispositif (128 à 135) de déplacement dans le sens transversal, entre deux freins de calage (135d et 132) constitués par des freins à disque.

9. Ligne de cisaillage selon l'une des revendications 5 à 8, caractérisée en ce que l'accouplement de réglage (133c) est un accouplement à dents en arc qui comporte un manchon d'accouplement (133d) qui est monté de manière à se déplacer dans le sens axial et à tourner et qui est en prise, par l'intermédiaire d'endentements rectilignes (133g), d'une part, et d'endentements obliques (133e), d'autre part, avec des parties d'arbre voisines l'une de l'autre (133a et 133b) du dispositif de déplacement dans le sens transversal (128 à 135), (133f, 133h).

10. Ligne de cisaillage selon la revendication 5, caractérisée en ce que le dispositif (28 à 35) de déplacement dans le sens transversal, du dispositif de guidage latéral (13) des rives de la tôle comporte un moteur électrique (35) qui lui est propre, notamment un moteur à courant continu, qui est en liaison de commande avec un moteur électrique analogue (3d), par exemple un moteur à courant continu, du dispositif de commande (3c) de la cisaille double (3, 3a, 3b) de cisaillage à largeur, par l'intermédiaire d'un circuit de synchronisation (44), par exemple d'un régulateur de synchronisation et en ce que le moteur électrique (35) du dispositif (28 à 35) de déplacement dans le sens transversal du dispositif de guidage latéral (13) des rives de la tôle est en liaison avec un dispositif (48) de réglage de l'écartement des lames (46) de la cisaille (3b) de cisaillage à largeur qui peut se déplacer dans le sens transversal ou avec un transformateur différentiel.

11. Ligne de cisaillage selon l'une des revendications 5 à 10, caractérisée en ce que le dispositif de déplacement (37, 42 ou 137, 142) du dispositif de guidage latéral (13) des rives de la tôle est un dispositif de commande électrique, un dispositif de commande hydraulique ou un dispositif de commande électro-hydraulique qui est en liaison de commande avec des dispositifs d'entraînement (43a, 43b) des dispotifs d'ouverture et de fermeture de la paire (6) de dispositifs de transport située à la sortie de la cisaille double (3, 3a, 3b) de cisaillage à largeur ou à l'entrée de la cisaille de cisaillage longitudinal (4).

12. Ligne de cisaillage selon l'une des revendications 5 à 11, caractérisée en ce que le dispositif de guidage latéral (13) des rives de la tôle est constitué par un galet d'appui (39 ou 139) qui peut tourner librement autour d'un axe vertical (38 ou 138) et qui est monté sur un bras pivotant (37 ou 137) qui peut tourner autour d'un axe horizontal (36 ou 136) orienté parallèlement à la direction de transport (2a) de la tôle (2) et qui est monté sur un chariot (23 ou 123) qui peut se déplacer horizontalement dans le sens transversal par rapport à la direction de transport (2a) de la tôle (2).

13. Ligne de cisaillage selon l'une des revendications 5 à 12, caractérisée en ce que le dispositif (42 ou 142) de soulèvement et d'abaissement du dispositif de guidage latéral (13) des rives de la tôle est monté sur le chariot (23 ou 123) et agit sur le bras pivotant (37 ou 137).

14. Ligne de cisaillage selon l'une des revendications 5 à 13, caractérisée en ce que le dispositif (28 à 35 ou 128 à 135) de déplacement dans le sens transversal contient un engrenage à crémaillère (28, 30 ou 128, 130) qui comporte une enveloppe (29 ou 129) montée à poste fixe et associée au pignon d'entraînement (30 ou 130) qui engrène avec la crémaillère (28 ou 128) tandis que la crémaillère (28 ou 128) est reliée au chariot (23 ou 123) par l'une de ses extrémités, par exemple par une articulation (27) ou par un manchon (127).

15. Ligne de cisaillage selon l'une des revendications 5 et 10 à 14, caractérisée en ce que le pignon d'entraînement (30) du dispositif (28 à 35) d'entraînement dans le sens transversal est monté, de manière que son axe soit orienté comme celui de l'arbre entraîné d'un engrenage démultiplicateur (34), sur un arbre (33) commun avec le disque de frein (31) d'un frein à disque (32) qui se trouve entre l'engrenage démultiplicateur (34) et l'enveloppe (29) qui contient le pignon (30).

16. Ligne de cisaillage selon l'une des revendications 5 à 15, caractérisé en ce que le chariot (23 ou 123) qui porte le bras pivotant (37 ou 137) et le galet vertical (39 ou 139) peut se déplacer le long d'un plan transversal vertical (13a) qui se trouve à une faible distance en arrière de l'extrémité d'entrée de la paire de lames (15, 17) de la cisaille de cisaillage longitudinal (4).

## Fig. 1

## Fig. 5

Fig. 2

Fig. 3

Fig. 4

**Fig. 6**

Fig. 7

VII

VIII

139
2
2d
140 138 115
124 114
137
142
127
128
126
136 123
124
135a 126
122
134a
134c
134b
134d
135

Fig. 8

## Fig. 9

## Fig. 10

Fig. 11